# EUROPÄISCHE PATENTANMELDUNG

(11) **EP 2 365 046 A1**
(43) Veröffentlichungstag der Anmeldung: **14.09.2011**
(21) Anmeldenummer: 10155205.7
(22) Anmeldetag: 02.03.2010
(51) Int. Cl.: C09J 163/00, C08G 59/54, C08L 63/00

(54) **Schlagzäher bei Raumtemperatur härtender zwei-komponentiger Strukturklebstoff**

(71) Anmelder: Sika Technology AG, 6340 Baar (CH)
(72) Erfinder: Frick, Karsten, 5453, Remetschwil (CH); Finter, Jürgen, 8037, Zürich (CH); Kramer, Andreas, 8006, Zürich (CH); Gerber, Ulrich, 8142, Uitikon-Waldegg (CH)
(74) Vertreter: Dux, Roland

(57) **Zusammenfassung**

Die vorliegende Erfindung betrifft das Gebiet der zweikomponentigen Epoxidharzzusammensetzungen sowie deren Verwendung als Reparaturklebstoff insbesondere im Fahrzeugbau. Die erfindungsgemässen Zweikomponentige Epoxidharzzusammensetzungen enthalten neben einer Epoxidharzkomponente **K1** eine Härterkomponente **K2**, die zwischen 1 und 10 Gew.-%, eines Aminogruppen-terminierten Polyamids **B** umfasst. Die Zusammensetzungen zeichnen sich durch eine starke Erhöhung der Schlagzähigkeit bei gleichzeitiger Erhaltung einer akzeptablen Zugscherfestigkeit aus.

## Beschreibung

### Technisches Gebiet

Die vorliegende Erfindung betrifft das Gebiet der zweikomponentigen Epoxidharzzusammensetzungen sowie deren Verwendung als Reparaturklebstoff insbesondere im Fahrzeugbau.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweissen immer häufiger hochwertige Klebstoffe eingesetzt. Werden strukturelle Teile verklebt, sind eine hohe Festigkeit und Schlagzähigkeit des Klebstoffes von grösster Wichtigkeit.

Im Fahrzeugbau und im Bereich der Fahrzeugreparatur haben sich hitzehärtende Epoxidklebstoffe etabliert, die üblicherweise bei Temperaturen von über 60°C und manchmal bis zu 170°C gehärtet werden. Oftmals ist deren Verwendung jedoch unvorteilhaft, beispielsweise bei der Reparatur von Fahrzeugen in Werkstätten, die über die notwendigen Einrichtungen zum Hitzehärten nicht verfügen. Daneben findet die Reparatur von Fahrzeugen - im Gegensatz zu deren Herstellung - bereits am vollständig ausgerüsteten Fahrzeug statt, so dass möglicherweise hitzeempfindliche Materialien in Mitleidenschaft gezogen werden können.

Insofern gewinnen Klebstoffe an Bedeutung, die bereits bei Raumtemperatur aushärten können, insbesondere zweikomponentige Epoxidharzklebstoffe. Diese zeigten jedoch vielfach nicht die gleichen mechanischen Eigenschaften wie die hitzehärtenden Klebstoffe, so dass noch Raum für weitere Verbesserungen besteht.

Allgemein zeichnen sich Epoxidklebstoffe zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl grosse Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber auch bei tiefen Temperaturen unter -10°C.

Deshalb wurde mittels verschiedener Methoden angestrebt, die Schlagzähigkeit von Epoxidklebstoffen zu verbessern.

In der Literatur werden im Wesentlichen zwei Methoden vorgeschlagen, wie die Sprödigkeit von Epoxidklebstoffen reduziert und damit die Schlagzähigkeit erhöht werden kann: Einerseits kann das Ziel durch die Beimengung von zumindest teilvernetzten hochmolekularen Verbindungen wie Latices von Kern/Schale-Polymeren oder anderen flexibilisierenden Polymeren und Copolymeren erreicht werden. Andererseits kann auch durch Einführung von Weichsegmenten, z.B. durch die entsprechende Modifizierung der Epoxidkomponenten, eine gewisse Zähigkeitserhöhung erreicht werden.

WO 2009/025991 A1 beschreibt Epoxidharzklebstoffe zur Verwendung im Fahrzeugbau, die bei vergleichsweise niedrigen Temperaturen aushärten. Die dort offenbarten zweikomponentigen Strukturkleber weisen drei Hauptbestandteile auf, nämlich von 15 bis 50 Gew.-% eines primären- oder sekundären Aminogruppen-terminierten Polyethers; von 4 bis 40 Gew.% eines primären- oder sekundären Aminogruppen-terminierten Kautschuks; und von 10 bis 30 Gew.% eines primären- oder sekundären Aminogruppen-terminierten Polyamids mit einer Schmelztemperatur von nicht mehr als 50°C. Diese Zusammensetzung enthält zusätzlich noch wenigstens einen Schlagzähigkeitsmodifikator.

Die beschriebenen zweikomponentigen Epoxidharzzusammensetzungen weisen jedoch eine noch verbesserungsfähige Schlagzähigkeit auf.

### Darstellung der Erfindung

Aufgabe der vorliegenden Erfindung ist es daher, neue zweikomponentige Epoxidharzzusammensetzungen zur Verfügung zu stellen, die eine Erhöhung der Schlagzähigkeit bei gleichzeitiger Erhaltung einer akzeptablen Zugscherfestigkeit erlauben.

Überraschenderweise hat sich gezeigt, dass die neuen zweikomponentigen Epoxidharzzusammensetzungen gemäss Anspruch 1 die Nachteile des Standes der Technik beheben.

Die erfindungsgemässen Epoxidharzzusammensetzungen sind insbesondere für den Fahrzeugbau geeignet, wo es erforderlich ist, dass Klebeverbindungen auch bei grossen mechanischen Beanspruchungen, beispielsweise bei einem Unfall, ihre Integrität beibehalten.

Weitere Aspekte der vorliegenden Erfindung sind Gegenstand weiterer unabhängiger Ansprüche. Besonders bevorzugte Ausführungsformen sind Gegenstand der abhängigen Ansprüche.

### Wege zur Ausführung der Erfindung

Die vorliegende Erfindung betrifft das Gebiet der zweikomponentigen Epoxidharzzusammensetzungen sowie deren Verwendung als Reparaturklebstoff insbesondere im Fahrzeugbau.

Die vorliegende Erfindung betrifft in einem ersten Aspekt eine zweikomponentige Epoxidharzzusammensetzung enthaltend
- eine Epoxidharzkomponente **K1**, die mindestens ein Epoxidharz **A** mit
   durchschnittlich mehr als einer Epoxidgruppe pro Molekül umfasst;
   und
- eine Härterkomponente **K2,** die zwischen 1-10 Gew.-%, bevorzugt 4-8 Gew.-%, bezogen auf das Gesamtgewicht der Härterkomponente, Aminogruppen-terminiertes Polyamid **B** umfasst;
   wobei mindestens eine der Komponenten **K1, K2** mindestens einen Schlagzähigkeitsmodifikator **C** enthält.

In der gesamten hier vorliegenden Schrift werden mit der Vorsilbe "Poly" in z.B. "Polyamid", "Polyisocyanat", "Polyol", oder "Polyphenol" Moleküle bezeichnet, die formal zwei oder mehr der jeweiligen funktionellen Gruppen enthalten.

Unter einem "Schlagzähigkeitsmodifikator" wird im vorliegenden Dokument ein Zusatz zu einer Epoxidharzmatrix verstanden, der bereits bei geringen Zuschlägen, insbesondere von 0.1 - 35 Gew.-%, bevorzugt von 0.5 - 15 Gew.- %, eine deutliche Zunahme der Zähigkeit der ausgehärteten Matrix bewirkt und somit in der Lage ist, höhere Biege-, Zug-, Schlag- oder Stossbeanspruchung aufzunehmen, bevor die Matrix einreisst oder bricht. Als Mass für die Schlagzähigkeit dient typischerweise die Schlagschälarbeit nach ISO 11343 angegeben. Als Bruchenergie (BE) wird hierbei die Fläche unter der Messkurve (von 25% bis 90%, gemäss ISO 11343) angegeben. Als weiteres Mass für die Schlagzähigkeit kann typischerweise auch die Schlagfestigkeit (Impact Peel) nach ISO 11343 verwendet werden.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Das Epoxidharz **A** in der Epoxidharzkomponente **K1** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (IX) auf

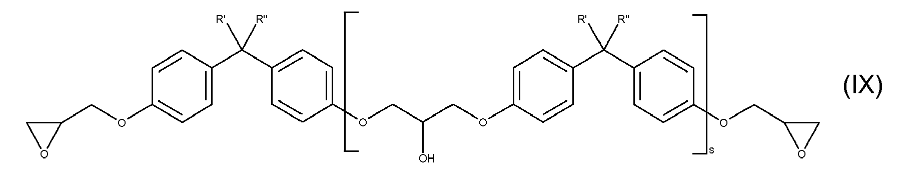

Hierbei stehen die Substituenten R' und R" unabhängig voneinander entweder für H oder CH₃- Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (IX) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (X) auf

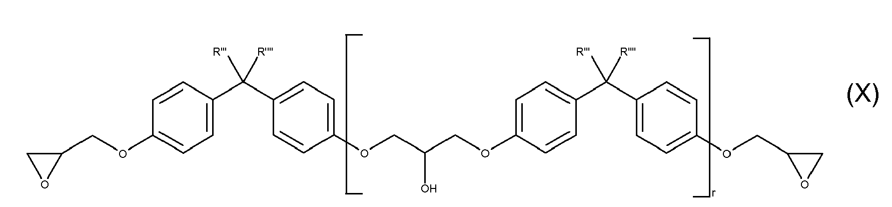

Hierbei stehen die Substituenten R'" und R"" unabhängig voneinander entweder für H oder CH₃- Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **A** sind sogenannte Novolake. Diese weisen insbesondere die folgende Formel auf: 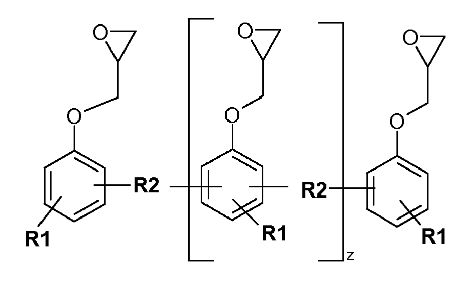 mit **R2**= 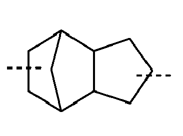 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelnamen EPN oder ECN sowie Tactix®556 von Huntsman oder unter der Produktereihe D.E.N.™ VON Dow Chemical kommerziell erhältlich.

Bevorzugt stellt das Epoxidharz **A** ein Epoxid-Flüssigharz der Formel (X) dar. In einer noch mehr bevorzugten Ausführungsform enthält die hitzehärtende Epoxidharzzusammensetzung sowohl mindestens ein Epoxid-Flüssigharz der Formel (X) als auch mindestens ein Epoxid-Festharz der Formel (IX).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Die erfindungsgemässe Zusammensetzung enthält weiterhin mindestens eine Härterkomponente **K2** für Epoxidharze. Bei diesem Härter handelt es sich vorzugsweise um eine Verbindung, welche ausgewählt ist aus der Gruppe bestehend aus Poly(ethyleniminen), Polyamidoaminen, Aminogruppen-terminierte Butadien/ Acrylnitril-Copolymeren und Polyaminen.

Polyamine sind insbesondere Polyoxyalkylen-Diamine mit Molekulargewicht unter 500 g/mol (Jeffamine® D-230, Jeffamine D400, Jeffamine® EDR-148), 4,7,10-Trioxatridecan-1-13-diamin, 4,9-Dioxadodecan-1,12-diamine, Ethylendiamin, und/oder 3(4),8(9)-Bis-(aminomethyl)-tricyclo[5.2.1.0^{2,6}] decan (TCD-Diamin^{®}, hergestellt von Celanese Chemicals).

In einer Ausführungsform enthält die Härterkomponente **K2** zusätzlich bis zu 20 Gew.-%, bezogen auf das Gesamtgewicht der Härterkomponente, Poly(ethylenimine).

Die Härterkomponente **K2**, umfasst zwischen 1-10 Gew.-%, bevorzugt 4-8 Gew.-%, bezogen auf das Gesamtgewicht der Härterkomponente, Aminogruppen-terminiertes Polyamid **B**. Der Bereich von zwischen 1-10 Gew.- % umfasst die jeweiligen Extremwerte, d.h. 1 und 10 Gew.-% nicht. Es hat sich herausgestellt, dass bei einer Überschreitung dieses Anteils insbesondere die Schlagzähigkeit des ausgehärteten Klebstoffes deutlich abnimmt. Bereits ab einem Anteil von ca. 8 Gew.-% an Aminogruppen-terminiertem Polyamid **B** verschlechtert sich die Schlagzähigkeit der Klebstoffzusammensetzung deutlich unter allen gewählten Testbedingungen. So hat sich erwiesen, dass die Schlagzähigkeit sowohl bei 0°C, 23°C (jeweils nach 7 Tagen), als auch bei 60°C (jeweils nach 2 Stunden) deutlich reduziert wurde, wenn die Klebstoffzusammensetzung mehr als 8, insbesondere mehr als oder gleich 10 Gew.-% an Polyamid enthielt (siehe hierzu auch Figuren...).

Die Zunahme der Schlagzähigkeit ging in den hierin beschriebenen Beispielen zwar mit einer leichten relativen Abnahme der Zugscherfestigkeit einher, es konnten jedoch insgesamt zweikomponentige Klebstoffzusammensetzungen mit deutlich verbesserten Gesamteigenschaften bereitgestellt werden.

Vorzugsweise handelt es sich bei dem Aminogruppen-terminierten Polyamid **B** um ein primäres oder sekundäres Aminogruppen-terminiertes Polyamid.

Das Polyamid enthält vorzugsweise durchschnittlich wenigstens 1,5, besonders bevorzugt wenigstens 1,8, und am meisten bevorzugt wenigstens 2,0 primäre oder sekundäre Aminogruppen pro Molekül. Ein typisches Beispiel sind 2-3 primäre oder sekundäre Aminogruppen pro Molekül, jedoch sind auch 6 oder mehr primäre oder sekundäre Aminogruppen pro Molekül vorstellbar.

Ein besonders bevorzugtes Polyamid ist ein Reaktionsprodukt aus einer dimerisierten Fettsäure und einem Polyamin. Beispiele für derartige Polyamide schliessen solche ein, die unter der Markenbezeichnung Versamid^{®} 115, Versamid^{®} 125 und Versamid^{®} 140 von der Firma Cognis erhältlich sind.

In einer Ausführungsform enthält die Zusammensetzung als Schlagzähigkeitsmodifikator **C** einen Aminogruppen-terminierten Schlagzähigkeitsmodifikator **C1**, welcher durch Umsetzung eines Isocyanatgruppen aufweisenden Polyurethan-Prepolymers, eines primären Diamins und gegebenenfalls mindestens eines Michael-Akzeptors hergestellt wird, wobei das Isocyanatgruppen aufweisende Polyurethan-Prepolymer hergestellt wird aus mindestens einem Polyisocyanat und mindestens einem Polyester- oder Polyetherpolyol, welches mindestens zwei Hydroxylgruppen aufweist, und welcher Schlagzähigkeitsmodifikator Teil der Härterkomponente **K2**, insbesondere in einer Menge von 1 bis 30 Gewichts-%, bezogen auf das Gewicht der Härterkomponente **K2**, ist.

Das Diamin ist insbesondere aus der Gruppe ausgewählt, die aus Ethergruppenhaltigen aliphatischen Diaminen, insbesondere Polyoxyalkylen-Diaminen, insbesondere Polyoxyethylen-Diaminen; Polyoxypropylen-Diaminen, Polyoxybutylen-Diaminen, Aminogruppen terminierten Polybutadienen und Butadien/ Acrylnitril-Copolymeren oder einem Gemisch hiervon besteht.

Insbesondere sind dies Polyoxyalkylen-Polyamine mit zwei Aminogruppen, beispielsweise erhältlich unter dem Namen Jeffamine^{®} (von Huntsman Chemicals), unter dem Namen Polyetheramin (von BASF) oder unter dem Namen PC Amine^{®} (von Nitroil), sowie Mischungen der vorgenannten Polyamine.

Bevorzugte Diamine sind Polyoxyalkylen-Polyamine mit zwei Aminogruppen, insbesondere solche der Formel der Formel (VIIIa).

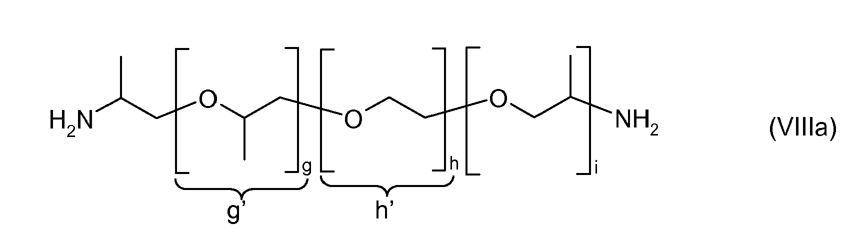

Hierbei stellen g' das Strukturelement, welches von Propylenoxid stammt, und h' das Strukturelement, welches von Ethylenoxid stammt, dar. Zudem stehen g, h und je für Werte von 0 bis 40, mit der der Massgabe, dass die Summe von g, h und i ≥ 1 ist. Insbesondere sind Molekulargewichte zwischen 100 und 4'000 g/mol bevorzugt.

Insbesondere bevorzugte Diamine sind Jeffamine^{®}, wie sie unter der D-Linie und ED-Linie von Huntsman Chemicals angeboten werden, wie zum Beispiel Jeffamine^{®} D-230, Jeffamine^{®} D-400, Jeffamine^{®} D-2000, Jeffamine^{®} D-4000, Jeffamine^{®} ED-600, Jeffamine^{®} ED-900 oder Jeffamine^{®} ED-2003.

Die Reaktionsführung zur Herstellung des Schlagzähigkeitsmodifikators **C1** kann erfindungsgemäss über mehrere Wege erfolgen, d.h. dass das Isocyanatgruppen aufweisende Polyurethan-Prepolymer und/oder das primäre Diamin und/oder das mit dem Diamin umgesetzte Isocyanatgruppen aufweisende Polyurethan-Prepolymer mit dem Michael-Akzeptor umgesetzt werden.

So kann sich in einer Ausführungsform ergeben, dass der Aminogruppen-terminierte Schlagzähigkeitsmodifikator mit sekundären Aminogruppen terminiert ist und aus der Umsetzung eines Aminogruppen-terminierten Schlagzähigkeitsmodifikators mit primären Aminogruppen und einem Michael-Akzeptor resultiert.

In einer Ausführungsform ist der erfindungsgemäss eingesetzte Schlagzähigkeitsmodifikator **C1** dadurch gekennzeichnet, dass für die Herstellung des Polyurethan-Prepolymers zusätzlich zum mindestens einen Polyether- oder Polyesterpolyol, noch mindestens ein Polymer **Q_{PM}** mit endständigen Amino-, Thiol- oder Hydroxylgruppen; und / oder mindestens ein, gegebenenfalls substituiertes, Polyphenol **Q_{PP}** verwendet werden kann.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6'000, insbesondere von 600 - 4'000, bevorzugt von 700 - 2'200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole. Speziell geeignet sind Polyoxyalkylendiole und -triole mit einem Ungesättigtheitsgrad tiefer als 0.02 mEq/g und mit einem Molekulargewicht im Bereich von 1 `000 - 30'000 g/mol, sowie Polyoxypropylendiole und -triole mit einem Molekulargewicht von 400 - 8'000 g/mol.

Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

Beispielhafte Verbindungen sind darüber hinaus:
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril- oder Acrylnitril-Methylmethacrylat-gepfropfte Polyetherpolyole, insbesondere wie sie beispielsweise von Elastogran unter dem Namen Lupranol® geliefert werden;
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Ethylen-Propylen-, Ethylen-Butylen-oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell unter dem Namen Hypro™(früher Hycar®) CTBN und CTBNX von Nanoresins AG, Deutschland, bzw. Emerald Performance Materials LLC erhältlich) hergestellt werden können.
- amphiphile Blockcopolymere, welche mindestens eine Hydroxylgruppe aufweisen.

Als amphiphiles Blockcopolymer, das wenigstens eine Hydroxylgruppe aufweist, wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728A1, WO 2006/052729 A1, WO 2006/052730 A1, WO 2005/097893 A1, deren Inhalt hiermit durch Bezugnahme eingeschlossen wird.

Beispiele für in Epoxidharz mischbare Blocksegmente sind besonders Polyethylenoxid-, Polypropylenoxid-, Poly(ethylenoxid-co-propylenoxid)- und Poly(ethylenoxid-ran-propylenoxid)-Blöcke sowie deren Mischungen.

Beispiele für in Epoxidharz nicht mischbare Blocksegmente sind einerseits insbesondere Polyether-Blöcke hergestellt aus Alkylenoxiden, welche mindestens 4 C-Atome aufweisen, bevorzugt Butylenoxid, Hexylenoxid und/oder Dodecylenoxid. Insbesondere als derartige Polyether-Blöcke bevorzugt sind Polybutylenoxid-, Polyhexylenoxid- und Polydodecylenoxid-Blöcke sowie deren Mischungen.

Beispiele für in Epoxidharz nicht mischbare Blocksegmente sind andererseits Polyethylen-, Polyethylenpropylen-, Polybutadien-, Polyisopren-, Polydimethylsiloxan- und Polyalkylmethacrylat-Blöcke sowie deren Mischungen.

In einer Ausführungsform ist das mindestens eine Hydroxylgruppe aufweisende amphiphile Blockcopolymer ein Blockcopolymer aus Ethylenoxid und/oder Propylenoxid sowie mindestens einem weiteren Alkylenoxid mit mindestens 4 C-Atomen, bevorzugt aus der Gruppe bestehend aus Butylenoxid, Hexylenoxid und Dodecylenoxid.

In einer weiteren, bevorzugten, Ausführungsform ist das mindestens eine Hydroxylgruppe aufweisende amphiphile Blockcopolymer ausgewählt aus der Gruppe bestehend aus Poly(isopren-block-ethylenoxid)-Blockcopolymere (PI-b-PEO), Poly(ethylenpropylen-b-ethylenoxid)-Blockcopolymere (PEP-b-PEO), Poly(butadien-b-ethylenoxid)-Blockcopolymere (PB-b-PEO), Poly(isopren-b-ethylenoxid-b-isopren)-Blockcopolymere (PI-b-PEO-PI), Poly(isopren-b-ethylenoxid-methylmethacrylat)-Blockcopolymere (PI-b-PEO-b-PMMA) und Poly(ethylenoxid)-b-poly(ethylen-alt-propylen)-Blockcopolymere (PEO-PEP).

Die amphiphilen Blockcopolymere können insbesondere als Diblock, Triblock oder Tetrablock vorliegen. Bei Multiblocks, d.h. insbesondere bei Tri-oder Tetrablocks, können diese linear oder verzweigt, insbesondere als Sternblock (star block), vorliegen.

Die Herstellung der amphiphilen Blockcopolymere ist dem Fachmann beispielsweise aus Macromolecules 1996, 29, 6994 - 7002 und Macromolecules 2000, 33, 9522 - 9534 und J. Polym. Sci. Part B: Polym. Phys. 2007, 45, 3338 - 3348, deren Offenbarung hiermit über Bezugnahme durch Referenz mit eingeschlossen wird, bekannt. Das amphiphile Blockcopolymer weist mindestens eine Hydroxylgruppe auf. Je nach Herstellverfahren kann das amphiphile Blockcopolymer eine oder mehrere Hydroxylgruppen aufweisen.

Wird beispielsweise bei der Polymerisierung von Alkylenoxiden mit Methanol gestartet und mit Säure abgebrochen, entsteht ein amphiphiles Blockcopolymer mit einer Hydroxylgruppe.

Wird hingegen mit einem Diol, z.B. Ethylenglycol, gestartet, entsteht ein amphiphiles Blockcopolymer mit zwei Hydroxylgruppen.

Werden Alkohole mit drei, vier bzw. noch mehr Hydroxylgruppen als Starter verwendet, entstehen dementsprechend amphiphiles Blockcopolymere mit drei, vier bzw. noch mehr Hydroxylgruppen.

Die Herstellung kann beispielsweise in einem sequentiellen Syntheseprozess erfolgen, in welchem zuerst das erste Monomer, z.B. Butylenoxid, unter Mithilfe eines Starters polymerisiert wird, gefolgt von der Zugabe des zweiten Monomers, z.B. Ethylenoxid, welches an das Ende des entstandenen Polymerisat des ersten Monomers anpolymerisiert wird. So kann beispielsweise unter Verwendung von einem Monol als Starter ein amphiphiles Diblockcopolymer Poly(ethylenoxid)-b-Poly(butylenoxid) (PEO-PBO) hergestellt werden. Unter Verwendung eines Diols entsteht so beispielsweise ein amphiphiles Triblockcopolymer Poly(ethylenoxid)-b-Poly(butylenoxid)-Poly(ethylenoxid) (PEO-PBO-PEO).

Es kann aber auch zuerst ein erstes Monomer, z.B. Butylenoxid, unter Mithilfe eines Starters polymerisiert werden, gefolgt von der Zugabe einer Mischung von zwei oder mehreren Monomeren, z.B. eine Mischung von Ethylenoxid und Butylenoxid, welches an das Ende des entstandenen Polymerisat des ersten Monomers anpolymerisiert werden. So kann beispielsweise ein amphiphiles Blockcopolymer Poly(ethylenoxid/butylenoxid)-Poly(butylenoxid)-Poly(ethylenoxid/ butylenoxid) (PEO/BO-PBO-PEO/BO) hergestellt werden.

Als Beispiel für ein derartiges amphiphiles Blockcopolymer, das wenigstens eine Hydroxylgruppe aufweist, sei Fortegra™ 100 von Dow Chemical genannt.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polymers **Q_{PM}** mit verwendet werden. Ebenso können kleine Mengen an Polyolen mit einer mittleren OH-Funktionalität von mehr als 3 mitverwendet werden, beispielsweise Zuckerpolyole.

Vorteilhaft sind die Polymere **Q_{PM}** di- oder höherfunktioneller Polyole mit OH-Equivalentsgewichten von 300 bis 6'000 g/OH-Equivalent, insbesondere von 600 bis 4'000 g/OH-Equivalent, vorzugsweise 700 - 2'200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Im Weiteren können als Polymere **Q_{PM}** auch di- oder höherfunktionelle Aminogruppen-terminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hypro™(früher Hycar®) ATBN von Nanoresins AG, Deutschland, bzw. Emerald Performance Materials LLC) vertrieben werden, sowie weitere Aminogruppen-terminierte synthetische Kautschuke oder Gemische der genannte Komponenten verwendet werden.

Es ist auch möglich, dass als Polymere **Q_{PM}** Hydroxyl-, Mercapto- oder Aminogruppen-terminierte Polysiloxane zu verwenden.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanpolymeren generell und bei den kettenverlängerten Polyurethanpolymeren im Speziellen ist vorteilhaft darauf zu achten, dass die Polymere nicht zu hohe Viskositäten aufweisen, insbesondere wenn höher funktionelle Verbindungen für die Kettenverlängerung eingesetzt werden.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆- Alkylengruppen, die mit Amino-, Thiol- oder, bevorzugt, Hydroxylgruppen terminiert sind oder ein Hydroxyl-Gruppen aufweisendes Polybutadien oder Polyisopren oder ein partiell oder vollständig hydriertes Reaktionsprodukt davon ist.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1 -Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

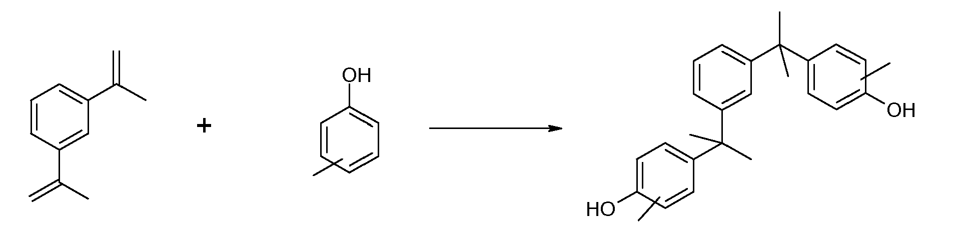

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

Für die Herstellung des Polyurethanprepolymers wird mindestens ein Polyisocyanat verwendet. Dieses hierfür eingesetzte Polyisocyanat ist insbesondere ein Diisocyanat oder Triisocyanat.

Als Polyisocyanate können aliphatische, cycloaliphatische oder aromatische Polyisocyanate, insbesondere Diisocyanate, verwendet werden. Insbesondere geeignet sind die folgenden:
- 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin.
- 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI).
- Oligomere (z.B. Biurete, Isocyanurate) und Polymere der vorgenannten monomeren Diisocyanate.
- Beliebige Mischungen der vorgenannten Polyisocyanate.

Bevorzugt sind monomere Diisocyanate, insbesondere MDI, TDI, HDI und IPDI.

Für die Herstellung eines erfindungsgemäss verwendeten Schlagzähigkeitsmodifikators **C1** geeignete Michael-Akzeptoren weisen in einer Ausführungsform die Formel (I) oder (Ia) auf 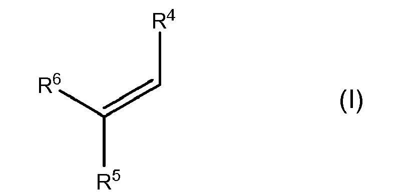 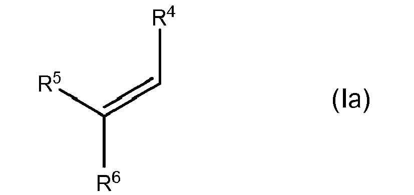 wobei
R⁴ für ein Wasserstoffatom oder für einen Rest steht, welcher ausgewählt ist aus der Gruppe bestehend aus -R⁷, -COOR⁷ und -CN, und
R⁵ für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R⁶ für ein Wasserstoffatom oder für einen Rest steht, welcher ausgewählt ist aus der Gruppe bestehend aus -CH₃, -R⁷, -COOR⁷ und -CH₂COOR⁷ ,
wobei R⁷ für einen einwertigen Kohlenwasserstoffrest mit 1 bis 20 C-Atomen steht.

In einer weiteren Ausführungsform weist der mit dem Isocyanatgruppen aufweisenden Polyurethan-Prepolymer umgesetzte Michael-Akzeptor eine Hydroxylgruppe auf.

Der Michael-Akzeptor mit einer Hydroxylgruppe weist erfindungsgemäss insbesondere die Formel (VII) oder (VIIa) auf 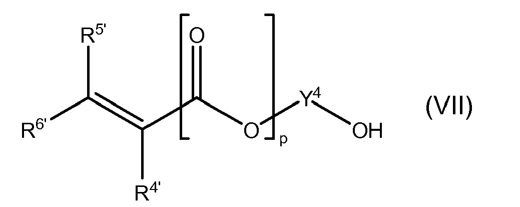 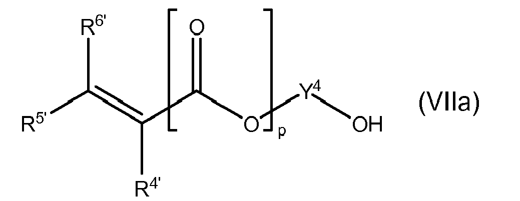 wobei
R⁴' für ein Wasserstoffatom oder für einen Rest steht, welcher ausgewählt ist aus der Gruppe bestehend aus -R⁷, -COOR⁷ und -CN, R⁵' für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R⁶' für ein Wasserstoffatom oder für einen Rest steht, welcher ausgewählt ist aus der Gruppe bestehend aus -R⁷ , -COOR⁷ ,
-CH₂COOR⁷ und -CN, wobei R⁷ für einen einwertigen Kohlenwasserstoffrest mit 1 bis 20 C-Atomen steht;
Y⁴ für eine Alkylengruppe mit 1 bis 6 Kohlenstoffatomen steht, oder unter der Voraussetzung für nichts steht, dass p und p' = 0 sind; und
p für 0 oder 1 steht.

Besonders bevorzugte Ausführungsbeispiele für Verbindungen der Formeln (VII) und (Vlla) sind solche Verbindungen, bei denen Y⁴ nichts und p 0 ist (Vinylalkohol); Y⁴ CH₂ und p 0 ist (Allylalkohol); Y⁴ CH₂CH₂ und p 1 ist, R^{4'} H oder CH₃ ist (Hydroxyethyl(meth)acrylat (HEA)(HEMA)); Y⁴ Propylen und p 1 ist, R^{4'} H oder CH₃ ist (Hydroxypropyl(meth)acrylat (HPA)(HPMA)); Y⁴ Butylen, p 1, R^{4'} H oder CH₃ ist (Hydroxybutyl(meth)acrylat).

Beispiele für geeignete Michael-Akzeptoren sind Malein- oder Fumarsäurediester wie Dimethylmaleinat, Diethylmaleinat, Dibutylmaleinat, Diethylfumarat; Citraconsäurediester wie Dimethylcitraconat; Acryl- oder Methacrylsäureester wie Methyl(meth)acrylat, Ethyl(meth)acrylat, Butyl(meth)acrylat, Lauryl(meth)acrylat, Stearyl(meth)acrylat, Tetrahydrofuryl(meth)acrylat, Isobornyl(meth)acrylat, Acryl- oder Methacrylsäureamide wie (Meth)acrylamid, Methyl(meth)acrylamid, Butyl(meth)acrylamid, Dimethyl(meth)acrylamid, Dibutyl(meth)acrylamid; Itaconsäurediester wie Dimethylitaconat; Zimtsäureester wie Methylcinnamat; Vinylphosphonsäurediester wie Vinylphosphonsäuredimethylester; Vinylsulfonsäureester, insbesondere Vinylsulfonsäurearylester; Vinylsulfone; Vinylnitrile wie Acrylnitril, Crotonitril, 2-Pentennitril oder Fumaronitril; 1-Nitroethylene wie β-Nitrostyrol, und Knoevenagel-Kondensationsprodukte, wie beispielsweise solche aus Malonsäurediestern und Aldehyden wie Formaldehyd, Acetaldehyd oder Benzaldehyd. Insbesondere geeignet sind Maleinsäurediester, (Meth)acrylsäureester, (Meth)acrylsäureamide, Phosphonsäurediester und Vinylnitrile.

Bevorzugte Michael-Akzeptoren sind Maleinsäuredimethyl-, Maleinsäurediethyl- und Maleinsäuredibutylester, (Meth)acrylsäuretetrahydrofurfuryl-, (Meth)acrylsäureisobornyl-, (Meth)acrylsäurehexyl-, (Meth)acrylsäurelauryl-, (Meth)acrylsäurestearyl-, (Meth)acrylsäure-2-hydroxyethyl- und (Meth)acrylsäure-3-hydroxypropylester, (Meth)acrylamid, N-Methyl(meth)acrylamid, N,N-Dimethyl(meth)acrylamid, Phosphonsäuredimethyl-, Phosphonsäurediethyl-und Phosphonsäuredibutylester, Acrylnitril, 2-Pentennitril, Fumaronitril und β-Nitrostyrol, sowie Mischungen aus diesen Verbindungen.

In einer Ausführungsform weist der erfindungsgemäss verwendete Schlagzähigkeitsmodifikator C1 die allgemeine Formel (II) auf 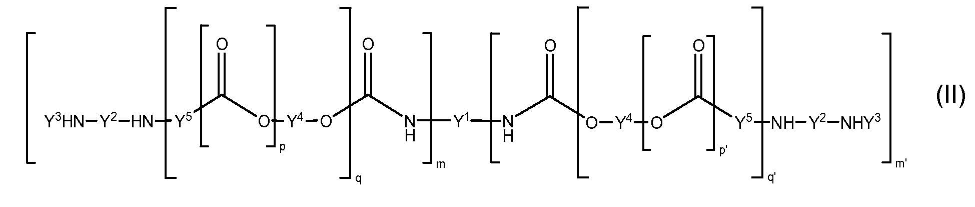 wobei Y¹ für ein mit m+m' Isocyanatgruppen terminiertes lineares oder verzweigtes Polyurethan-Prepolymer nach dem Entfernen aller endständigen Isocyanatgruppen steht;
Y² für eine zweiwertige Gruppe eines Polyoxyalkylens mit C₂-C₆-Alkylengruppen, eines Polybutadiens, eines Butadien/Acrylnitril-Copolymers oder eines synthetischen Kautschukes steht;
Y³ unabhängig voneinander für H oder eine Alkylgruppe mit 1 bis 10 Kohlenstoffatomen oder für einen Rest der Formel (III) steht, 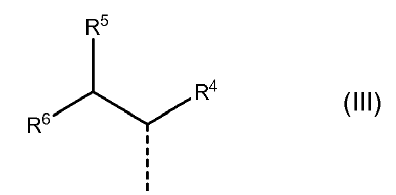 wobei
R⁴ für ein Wasserstoffatom oder für einen Rest steht, welcher ausgewählt ist aus der Gruppe bestehend aus -R⁷, -COOR⁷ und -CN, und
R⁵ für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R⁶ für ein Wasserstoffatom oder für einen Rest steht, welcher ausgewählt ist aus der Gruppe bestehend aus -R⁷, -COOR⁷, -CH₂COOR⁷ und -CN,
wobei R⁷ für einen einwertigen Kohlenwasserstoffrest mit 1 bis 20 C-Atomen steht;
Y⁴ für eine Alkylengruppe mit 1 bis 6 Kohlenstoffatomen steht, oder unter der Voraussetzung für nichts steht, dass p und p' = 0 sind; und
Y⁵ für einen zweiwertigen Rest der Formel (IV) oder (IV') steht; 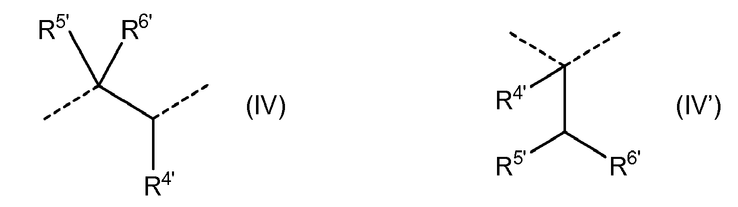 wobei
R^{4'} für ein Wasserstoffatom oder für einen Rest steht, welcher ausgewählt ist aus der Gruppe bestehend aus -R⁷, -COOR⁷ und -CN,
R^{5'} für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R^{6'} für ein Wasserstoffatom oder für einen Rest steht, welcher ausgewählt ist aus der Gruppe bestehend aus -R⁷, -COOR⁷, -CH₂COOR⁷ und -CN,
wobei R⁷ für einen einwertigen Kohlenwasserstoffrest mit 1 bis 20 C-Atomen steht;
p und p' je für 0 oder 1 steht;
q und q' je für 0 oder 1 steht;
m und m' je für Werte von 0 bis 7, bevorzugt für 0 oder 1 oder 2 stehen mit der Massgabe, dass m + m' für einen Wert von 1 bis 8, insbesondere für 1 oder 2, steht.

Unter der Massgabe, dass q und q' = 0 ist, vereinfacht sich die Formel (II) zu Formel (V), d.h. 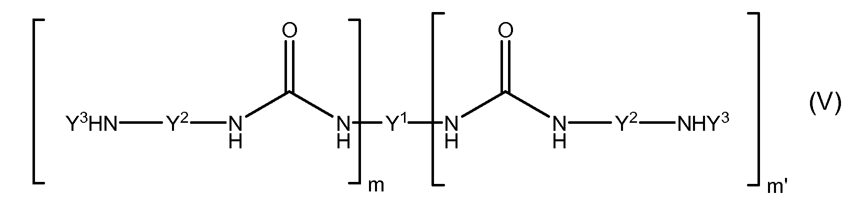 wobei Y¹ für ein mit m+m' Isocyanatgruppen terminiertes lineares oder verzweigtes Polyurethan-Prepolymer nach dem Entfernen aller endständigen Isocyanatgruppen steht;
Y² für eine zweiwertige Gruppe eines Polyoxyalkylens mit C₂-C₆-Alkylengruppen, eines Polybutadiens, eines Butadien/Acrylnitril-Copolymers oder eines synthetischen Kautschukes steht; und
Y³ unabhängig voneinander für H oder eine Alkylgruppe mit 1 bis 10 Kohlenstoffatomen oder für einen Rest der Formel (VI) steht, 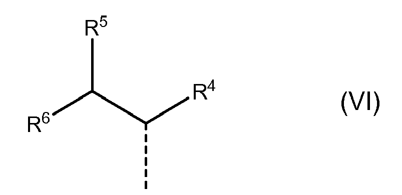 wobei
R⁴ für ein Wasserstoffatom oder für einen Rest steht, welcher ausgewählt ist aus der Gruppe bestehend aus -R⁷, -COOR⁷ und -CN, und
R⁵ für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R⁶ für ein Wasserstoffatom oder für einen Rest steht, welcher ausgewählt ist aus der Gruppe bestehend aus -R⁷ , -COOR⁷ , -CH₂COOR⁷ und -CN,
wobei R⁷ für einen einwertigen Kohlenwasserstoffrest mit 1 bis 20 C-Atomen steht;
m und m' je für Werte von 0 bis 7, bevorzugt für 0 oder 1 oder 2 stehen mit der Massgabe, dass m + m' für einen Wert von 1 bis 8, insbesondere für 1 oder 2, steht.

Die gestrichelten Linien in den Formeln dieses Dokumentes stellen jeweils die Bindung zwischen dem jeweiligen Substituenten und dem dazugehörigen Molekülrest dar.

In einer weiteren Ausführungsform ist der Schlagzähigkeitsmodifikator C1 dadurch gekennzeichnet, dass das aus der Umsetzung des Isocyanatgruppen aufweisenden Polyurethan-Prepolymers mit dem Michael-Akzeptor gewonnene Reaktionsprodukt weiter mit einem primären Diamin und nachfolgend gegebenenfalls mit einem Michael-Akzeptor, oder mit einem durch Reaktion mit einem Michael-Akzeptor hergestellten sekundären Diamin umgesetzt wird, wobei das primäre Diamin ein Molekulargewicht von 100-4'000 g/mol, bevorzugt 400-3'000 g/mol, besonders bevorzugt 600-2'200 g/mol aufweist.

Ein Verfahren zur Herstellung des Schlagzähigkeitsmodifikators **C1** ist im Folgenden dargestellt. Erfindungsgemäss wird der Aminogruppen-terminierte Schlagzähigkeitsmodifikator **C1** durch Umsetzung eines Isocyanatgruppen aufweisenden Polyurethan-Prepolymers, eines primären Diamins und gegebenenfalls mindestens eines Michael-Akzeptors hergestellt. Hierbei ergeben sich vielfältige Möglichkeiten der Reaktionsfolge und der sich daraus ergebenden Produkte.

Zur weiteren Verdeutlichung der Synthese des Schlagzähigkeitsmodifikators **C1** haben sich insbesondere folgende Reaktionswege als vorteilhaft erwiesen:

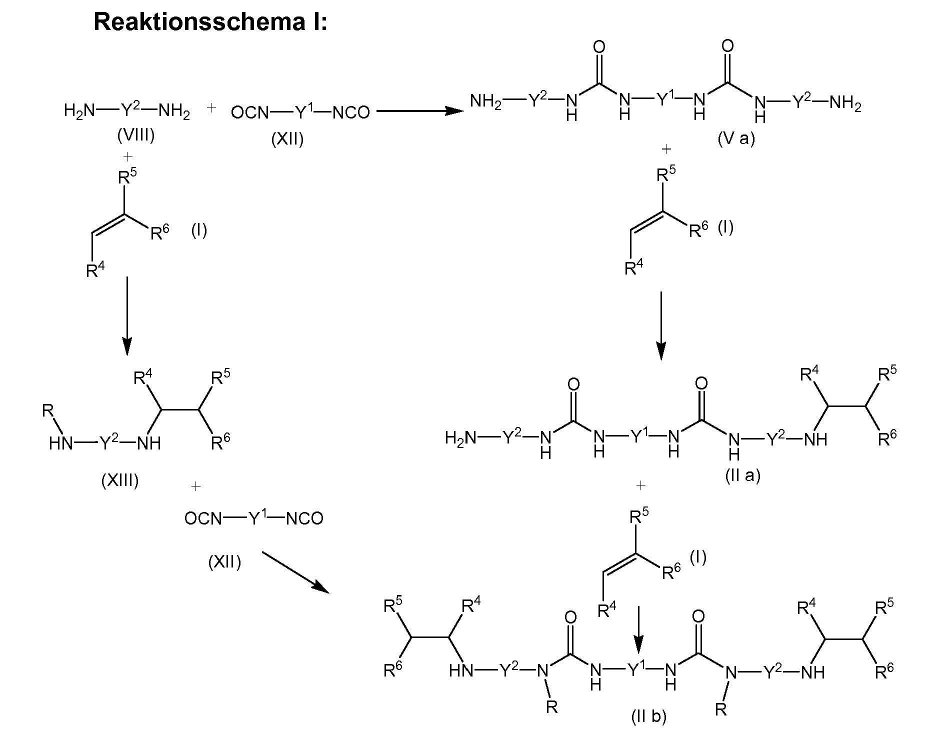

Gemäss Reaktionsschema I erfolgt zunächst die Umsetzung eines primären Diamins der Formel (VIII) mit einem Isocyanatgruppen aufweisenden Polyurethan-Prepolymer der Formel (XII) zum erfindungsgemässen Aminogruppen-terminierten Schlagzähigkeitsmodifikator der Formel (V a). In diesem Fall weist der Aminogruppen-terminierten Schlagzähigkeitsmodifikator primäre Aminogruppen auf.

Alternativ reagiert das primäre Diamin (VIII) bereits in einem ersten Reaktionsschritt mit dem Michael-Akzeptor der Formel (I) zum sekundären Amin der Formel (XIII). In Formel (XIII) und Formel (II b) steht R je nach Stöchiometrie vom primären Diamin (VIII) in Bezug auf Michael Akzeptor der Formel (I) für H oder für einen Substituent der Formel (VI). Dieses sekundäre Amin der Formel (XIII) kann dann in einem weiteren Schritt mit Isocyanatgruppen aufweisenden Polyurethan-Prepolymer der Formel (XII) zum erfindungsgemässen Aminogruppen-terminierten Schlagzähigkeitsmodifikator der Formel (II b) umgesetzt werden. In diesem Fall weist der Aminogruppen-terminierten Schlagzähigkeitsmodifikator sekundäre Aminogruppen auf.

Alternativ ist dieser Aminogruppen-terminierten Schlagzähigkeitsmodifikator der Formel (II b) jedoch auch über eine Reaktion des Schlagzähigkeitsmodifikator der Formel (V a) mit dem Michael-Akzeptor der Formel (I) zugänglich. Hierbei wird je nach eingesetzter Menge des Michael-Akzeptor der Formel (I) ein Aminogruppen-terminierter Schlagzähigkeitsmodifikator der Formel (II a) oder (II b) erhalten. In ersterem Fall weist der Aminogruppen-terminierte Schlagzähigkeitsmodifikator sowohl primäre als auch sekundäre Aminogruppen auf in letzterem Fall sind die beiden primären Aminogruppen des Aminogruppen-terminierten Schlagzähigkeitsmodifikators der Formel (V a) durch den Michael-Akzeptor zu sekundären Aminogruppen umgesetzt worden.

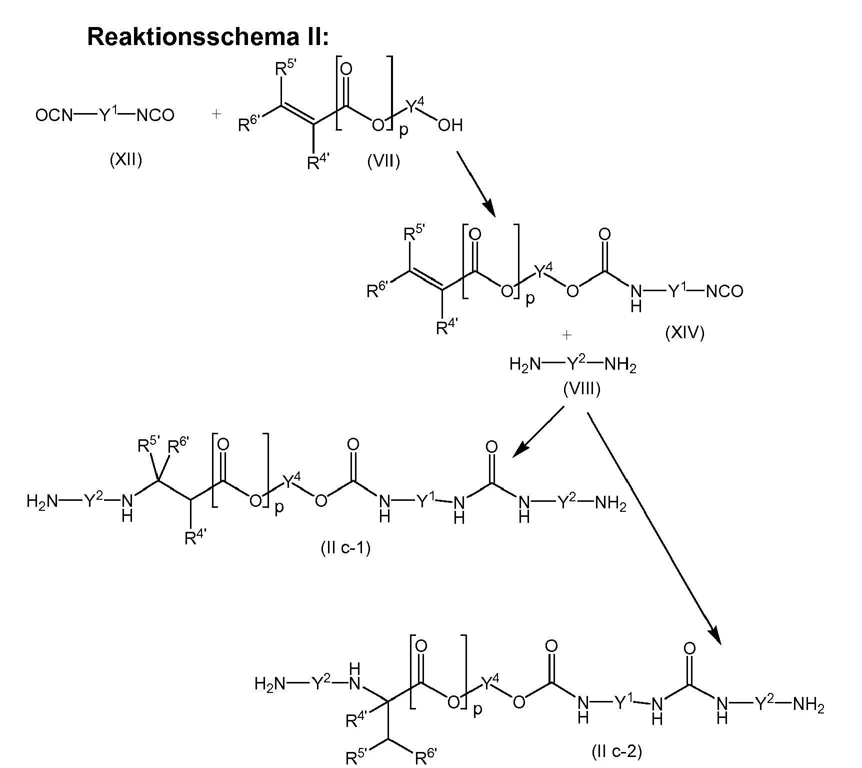

Wird als Michael-Akzeptor ein Hydroxyl-Gruppen enthaltender Michael-Akzeptor eingesetzt ergeben sich neue Herstellungswege. Derartige Reaktionswege sind insbesondere in den Reaktionschemen II und III anhand des Hydroxyl-Gruppen enthaltenden Michael-Akzeptor nach Formel (VII) aufgezeigt.

Gemäss Reaktionsschema II erfolgt eine Umsetzung eines Isocyanatgruppen aufweisenden Polyurethan-Prepolymers der Formel (XII) mit dem Hydroxyl-Gruppen enthaltenden Michael-Akzeptor nach Formel (VII). Wenn hierbei die Menge des Hydroxyl-Gruppen enthaltenden Michael-Akzeptor nach Formel (VII) so gewählt wird, dass das Verhältnis der Anzahl Hydroxyl-Gruppen des Michael-Akzeptors zu Anzahl Isocyanatgruppen des Isocyanatgruppen aufweisenden Polyurethan-Prepolymers der Formel (XII) 0.5 beträgt, führt diese Umsetzung quantitativ zum Isocyanat-Gruppen aufweisenden Zwischenprodukt der Formel (XIV), das in einem folgenden Reaktionsschritt mit dem primären Diamin nach Formel (VIII) (im Überschuss eingesetzt) addiert wird. Je nachdem, wie dieses Diamin an die Doppelbindung des Zwischenproduktes der Formel (XIV) addiert wird, werden hierbei die erfindungsgemässen Schlagzähigkeitsmodifikatoren der Formel (II c-1) beziehungsweise der Formel (II c-2) gebildet.

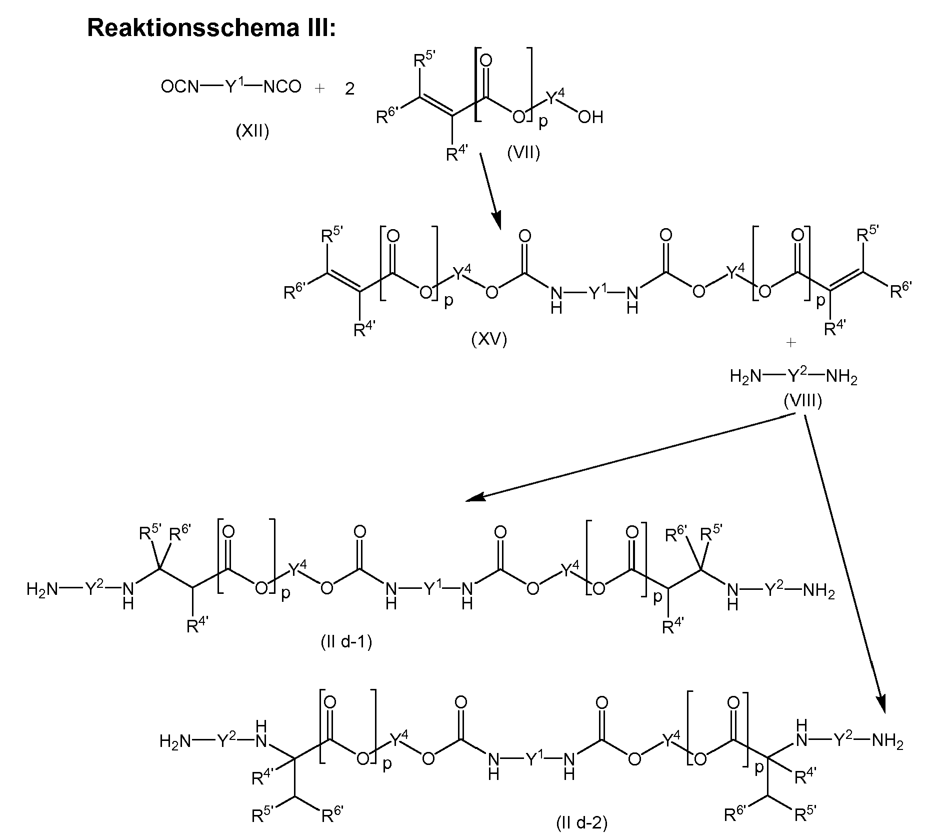

Wenn ein Hydroxyl-Gruppen enthaltenden Michael-Akzeptor nach Formel (VII) mit einem Isocyanatgruppen aufweisenden Polyurethan-Prepolymers der Formel (XII) stöchiometrisch oder im stöchiometrischen Überschuss des Hydroxyl-Gruppen enthaltenden Michael-Akzeptors umgesetzt wird (d.h. das Verhältnis von Anzahl Hydroxyl-Gruppen des Michael-Akzeptors zu Anzahl Isocyanatgruppen des Isocyanatgruppen aufweisenden Polyurethan-Prepolymers der Formel (XII) beträgt einen Wert von ≥1), erfolgt, wird -wie in Reaktionsschema III dargestellt- quantitativ das Zwischenprodukt gemäss Formel (XV) gebildet.

In einem weiteren Reaktionsschritt wird gemäss Reaktionsschema III das Zwischenprodukt gemäss Formel (XV) mit einem primären Diamin der Formel (VIII) umgesetzt. Je nachdem, wie dieses Diamin an die Doppelbindungen des Zwischenproduktes der Formel (XV) addiert wird, werden hierbei die erfindungsgemässen Schlagzähigkeitsmodifikatoren der Formel (II d-1), beziehungsweise der Formel (II d-2), gebildet.

Es ist dem Fachmann klar, dass, wenn ein Hydroxyl-Gruppen enthaltenden Michael-Akzeptor nach Formel (VII) mit einem Isocyanatgruppen aufweisenden Polyurethan-Prepolymers der Formel (XII) für die Reaktion so eingesetzt wird, dass das Verhältnis von Anzahl Hydroxyl-Gruppen des Michael-Akzeptors zu Anzahl Isocyanatgruppen des Isocyanatgruppen aufweisenden Polyurethan-Prepolymers der Formel (XII) einen Wert von zwischen 0.5 und 1 beträgt, dass eine Mischung des Reaktionsproduktes der Formel (XIV) -wie in Reaktionsschema II dargestellt- und des Reaktionsproduktes (XV) -wie in Reaktionsschema III dargestellt- gebildet werden, worauf sich nach weiterer Umsetzung mit einem primären Diamin der Formel (VIII) eine Mischung der erfindungsgemässen Schlagzähigkeitsmodifikatoren der Formel (II c-1), beziehungsweise -je nachdem, wie sich das Diamin an die Doppelbindungen des Zwischenproduktes addiert- der Formel (II c-2), und der Formel (II d-1), beziehungsweise -je nachdem, wie sich das Diamin an die Doppelbindungen des Zwischenproduktes addiert- der Formel (II d-2), bildet.

Es sei darauf hingewiesen, dass es sich bei dem Michael-Akzeptor gemäss Formel (VII) um eine bevorzugte Ausführungsform, nämlich einen Hydroxyl-enthaltender Michael-Akzeptor, eines Michael-Akzeptors handelt. Hierdurch eröffnet sich durch den Syntheseweg, wie er in Reaktionsschema III gezeigt ist, eine direkte Umsetzung des Michael-Akzeptors mit dem Isocyanat-gruppen aufweisenden Polyurethan-Prepolymer zu erreichen, was sich dadurch äussert, dass das vom Michael-Akzeptor stammende Strukturelement -im Gegensatz zum Syntheseweg gemäss Reaktionsschema 1- weiter weg vom Polymerende entfernt in die Polymerhauptkette (Polymer backbone) des Aminogruppen-terminierten Schlagzähigkeitsmodifikators integriert werden kann.

In einer Ausführungsform enthält die zweikomponentige Epoxidharz-zusammensetzung einen Flüssigkautschuk **C2,** welcher ein Epoxid-terminiertes Polymer, insbesondere ein Epoxid-terminiertes Acrylnitril/Butadien-Copolymer, enthält, und welcher Teil der Epoxidharzkomponente **K1**, insbesondere in einer Menge von 1 bis 45 Gewichts-%, bezogen auf das Gewicht der Epoxidharzkomponente **K1**, ist.

In einer weiteren Ausführungsform ist der Schlagzähigkeitsmodifikator ein Polymer **C3** der Formel (XI)

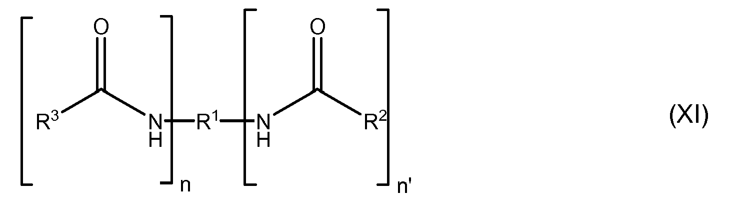

Hierbei stehen n und n' stehen unabhängig von einander je für Werte von 0 bis 7, bevorzugt für 0 oder 1 oder 2 mit der Massgabe, dass n + n' für einen Wert von 1 bis 8, insbesondere für 1 oder 2, steht.

Weiterhin steht R¹ für ein mit n+n' Isocyanatgruppen terminiertes lineares oder verzweigtes Polyurethanprepolymer nach dem Entfernen aller endständigen Isocyanatgruppen.

R² und R³ stehen unabhängig voneinander je für einen Substituenten, welcher ausgewählt ist aus der Gruppe bestehend aus 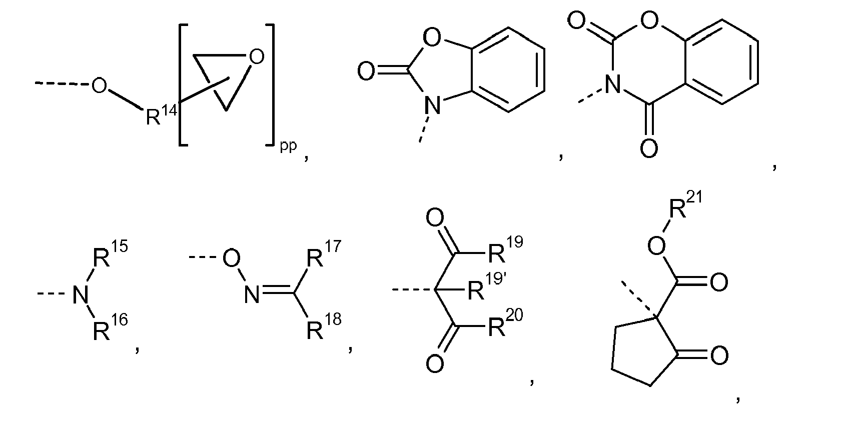 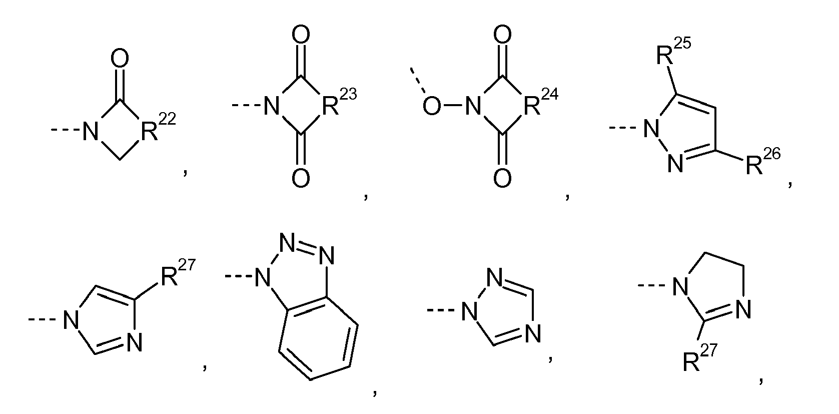 und

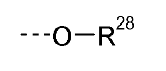

Hierbei steht R¹⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid-und Epoxidgruppen und pp steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Weiterhin stehen R¹⁵, R¹⁶, R¹⁷ und R¹⁸ je unabhängig voneinander für eine Alkyl- oder Cycloalkyl- oder Aralkyl- oder Arylalkyl-Gruppe oder aber R¹⁵ bildet zusammen mit R¹⁶, oder R¹⁷ zusammen mit R¹⁸ , einen Teil eines 4- bis 7- gliedrigen Rings, welcher allenfalls substituiert ist.

Weiterhin steht R¹⁹, R^{19'} und R²⁰ je unabhängig voneinander für eine Alkyl- oder Aralkyl- oder Arylalkyl-Gruppe oder für eine Alkyloxy- oder Aryloxy-oder Aralkyloxy-Gruppe und R¹¹ für eine Alkylgruppe.

R²³ und R²⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R²⁵, R²⁶ und R²⁷ stehen je unabhängig voneinander für H oder für eine Alkylgruppe oder für eine Arylgruppe oder eine Aralkylgruppe.

Schliesslich steht R²⁸ für eine Aralkylgruppe oder für eine ein- oder mehrkernige substituierte oder unsubstituierte Aromatengruppe, welche gegebenenfalls aromatische Hydroxylgruppen aufweist.

Als R²⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R²⁸ sind andererseits insbesondere Hydroxybenzylalkohol und Benzylalkohol nach Entfernung einer Hydroxylgruppe zu betrachten.

Falls R¹⁵ R¹⁶, R¹⁷, R¹⁸, R¹⁹, R^{19'}, R²⁰, R²¹, R²⁵, R²⁶ oder R²⁷ für eine Alkylgruppe steht, ist diese insbesondere eine lineare oder verzweigte C₁-C₂₀-Alkylgruppe.

Falls R¹⁵ R¹⁶, R¹⁷ R¹⁸ R¹⁹, R^{19'}, R²⁰, R²⁵, R²⁶, R²⁷ oder R²⁸ für eine Aralkylgruppe steht, ist diese Gruppierung insbesondere eine über Methylen gebundene aromatische Gruppe, insbesondere eine Benzylgruppe.

Falls R¹⁵, R¹⁶, R¹⁷, R¹⁸ , R¹⁹, R^{19'} oder R²⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste R² und/oder R³ sind Reste, welche ausgewählt sind aus der Gruppe bestehend aus 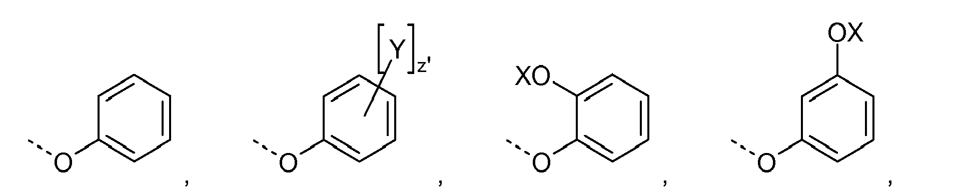 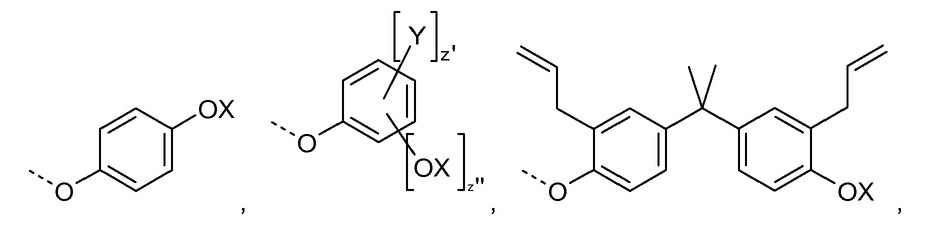 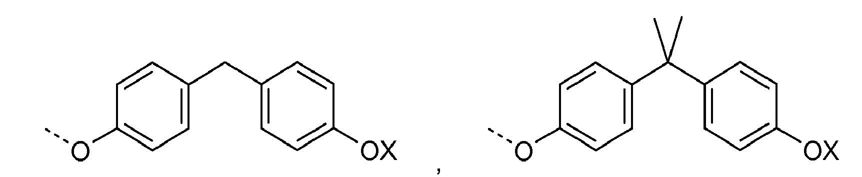 und

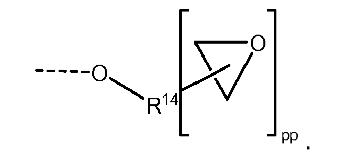

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allylgruppe, Methylgruppe, Nonylgruppe, Dodecylgruppe oder eine ungesättigter C₁₅-Alkylgruppe mit 1 bis 3 Doppelbindungen bevorzugt.

Der Rest X steht für H oder für einen Alkyl-, Aryl-, Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Bevorzugt sind die Substituenten R² und R³ identisch.

Die Herstellung des Schlagzähigkeitsmodifikator **C3** der Formel (XI) erfolgt aus dem mit n+n' Isocyanatgruppen terminierten linearen oder verzweigten Polyurethanprepolymer mit einer oder mehreren Isocyanat-reaktiven Verbindungen R²H und oder R³H. Falls mehrere derartige Isocyanat-reaktive Verbindungen eingesetzt werden, kann die Reaktion sequentiell oder mit einer Mischung dieser Verbindungen erfolgen.

Falls die Substituenten R² und R³ reaktiv mit Epoxidgruppen sind, ist der Schlagzähigkeitsmodifikator **C3** der Formel (XI) Teil der Härterkomponente **K2**. Falls die Substituenten R² und R³ reaktiv mit Aminogruppen sind, ist der Schlagzähigkeitsmodifikator **C3** der Formel (XI) Teil der Epoxidharzkomponente **K1**. Sind die Substituenten R² und R³ bei Raumtemperatur nicht reaktiv mit Epoxidgruppen und nicht reaktiv mit den Aminogruppen, ist der Schlagzähigkeitsmodifikator **C3** der Formel (XI) Teil der Epoxidharzkomponente **K1** und/oder der Härterkomponente **K2**. Der Anteil des Schlagzähigkeitsmodifikators **C3** der Formel (XI) wird vorteilhaft in einer Menge von 1 bis 45 Gewichts-%, insbesondere von 10 bis 30 Gew.-%, bezogen auf das Gewicht der jeweiligen Komponente **K1** und/oder **K2**, eingesetzt.

In einer weiteren Ausführungsform schliesslich kann der Schlagzähigkeitsmodifikator ein Aminogruppen-terminiertes Acrylnitril/Butadien-Copolymer **C4** sein, das Teil der Härterkomponente **K2**, insbesondere in einer Menge von 10 bis 40 Gewichts-%, bezogen auf das Gewicht der Härterkomponente **K2**, ist.

In einer weiteren bevorzugten Ausführungsform enthält die zweikomponentige Epoxidharzzusammensetzung der vorliegenden Erfindung als Schlagzähigkeitsmodifikator **C** eine Kombination von Aminogruppen-terminiertem Schlagzähigkeitsmodifikator **C1** und/oder Flüssigkautschuk **C2** und/oder Polymer **C3** der Formel (XI) und/oder Aminogruppen-terminiertem Acrylnitril/Butadien-Copolymer **C4.**

Die Gewichtssumme des in der jeweiligen Komponenten (**K1, K2**) befindlichen Aminogruppen-terminierten Schlagzähigkeitsmodifikators **C1**, Flüssigkautschuks **C2**, Polymers **C3** und Aminogruppen-terminierten Acrylnitril/Butadien-Copolymers C4 beträgt vorzugsweise nicht mehr als 80 Gew.-%, insbesondere nicht mehr als 50 Gew.-%, bezogen auf das Gewicht der jeweiligen Komponente (**K1, K2**).

Die zweikomponentige Epoxidharzzusammensetzung gemäss der vorliegenden Erfindung kann in einer Ausführungsform weiterhin mindestens einen ein Core-Shell Polymer enthalten. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen, bzw. Selbstorganisation, eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten. Core-Shell Polymere werden vorzugsweise in der Epoxidharzkomponente **K1** verwendet.

Die zweikomponentige Epoxidharzzusammensetzung gemäss der vorliegenden Erfindung kann in einer Ausführungsform weiterhin mindestens einen Füllstoff **F** enthalten. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Ein weiteres Beispiel sind funktionalisierte Alumoxane, wie sie z. B. in US 6,322,890 beschrieben sind und deren Inhalt hiermit durch Bezugnahme mit eingeschlossen wird.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

Die Verwendung von Füllstoffen ist dahingehend vorteilhaft, als dass sie die Alterungsbeständigkeit des Klebstoffes verbessern und die mechanischen Eigenschaften vorteilhaft beeinflussen.

Die zweikomponentige Epoxidharzzusammensetzung kann weiterhin weitere Bestandteile beinhalten. Beispielsweise sind dies:
- Lösemittel, Filmbildehilfsmittel oder Extender, wie Toluol, Xylol, Methylethylketon, 2-Ethoxyethanol, 2-Ethoxy-ethylacetat, Benzylalkohol, Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Diphenylmethan, Diisopropylnaphthalin, Erdölfraktionen wie zum Beispiel Solvesso-Typen (von Exxon), aromatische Kohlenwasserstoffharze, insbesondere Phenolgruppen-haltige Typen, Sebacate, Phthalate, organische Phosphor- und Sulfonsäureester und Sulfonamide;
- Reaktivverdünner, beispielsweise Epoxid-Reaktivverdünner, wie sie vorgängig bereits erwähnt wurden, epoxidiertes Sojaöl oder Leinöl, Acetoacetatgruppen aufweisende Verbindungen, insbesondere acetoacetylierte Polyole, Butyrolakton, sowie weiterhin Isocyanate und Reaktivgruppen-aufweisende Silikone;
- Polyamine, wie beispielsweise
   ◆aliphatische, cycloaliphatische oder arylaliphatische primäre Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4-und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0²,⁶]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
   ◆Ethergruppen-haltige aliphatische primäre Diamine beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadode-can-1,12-diamin, 5,8-Dioxadodecan-3,10-diamin, 4,7,10-Trioxatridecan-1,13-diamin und höhere Oligomere dieser Diamine, Bis-(3-aminopropyl)-polytetrahydrofurane und andere Polytetrahydrofuran-diamine mit Molekulargewichten im Bereich von beispielsweise 350 bis 2000, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
   ◆sekundäre Aminogruppen aufweisende Polyamine, beispielsweise Diethylentriamin (DETA), Dipropylentriamin (DPTA), Bishexamethylentriamin (BHMT), 3-(2-Aminoethyl)aminopropylamin, N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylendipiperidin, N-alkylierte Polyetheramine, beispielsweise die Jeffamine^{®}-Typen SD-231, SD-401, SD-404 und SD-2001 (von Huntsman);
   ◆Amin/Polyepoxid-Addukte, insbesondere Addukte aus den genannten Polyaminen mit Diepoxiden im Molverhältnis von mindestens 2/1, insbesondere im Molverhältnis von 2/1 bis 6/1;
   ◆Polyamidoamine, welche Umsetzungsprodukte aus einer ein- oder mehrwertigen Carbonsäure, beziehungsweise deren Ester oder Anhydride, sind, insbesondere Umsetzungsprodukte aus einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder Triethylentetramin (TETA), darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607, Euretek^{®} 530 (von Huntsman), Beckopox^{®} EH 651, EH 654, EH 655, EH 661 und EH 663 (von Cytec);
   ◆Polyethylenimine (PEI). Dabei handelt es sich um verzweigte polymere Amine aus der Polymerisation von Ethylenimin. Ein geeignetes Polyethylenimin weist typischerweise ein mittleres Molekulargewicht im Bereich von 250 bis 25'000 g/mol auf und enthält tertiäre, sekundäre und primäre Aminogruppen. Polyethylenimine sind beispielsweise erhältlich unter dem Handelsnamen Lupasol^{®} (von BASF), zum Beispiel die Typen Lupasol^{®} FG, Lupasol^{®} G20 und Lupasol^{®} PR 8515;
      - Polymere, wie beispielsweise Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine und gereinigte Montan-Wachse;
      - Fasern, beispielsweise aus Kunststoff oder Glas;
      - Pigmente, beispielsweise Titandioxid und Eisenoxide;
      - Beschleuniger, welche die Reaktion zwischen Aminogruppen und Epoxidgruppen beschleunigen, beispielsweise Säuren oder zu Säuren hydrolysierbare Verbindungen, beispielsweise organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; weiterhin tertiäre Amine wie 1,4-Diazabicyclo[2.2.2]octan, Benzyldimethylamin, α-Methylbenzyldimethylamin, Triethanolamin, Dimethyl-aminopropylamin, Salze solcher tertiärer Amine, quaternäre Ammoniumsalze, wie beispielsweise Benzyltrimethylammoniumchlorid, Phenole, insbesondere Bisphenole, Phenol-Harze und Mannich-Basen wie beispielsweise 2-(Dimethylaminomethyl)-phenol und 2,4,6-Tris-(dimethylaminomethyl)-phenol, Phosphite wie beispielsweise Di-und Triphenylphosphite, sowie Mercaptogruppen aufweisende Verbindungen, wie sie bereits vorgängig genannt wurden;
      - Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
      - Haftverbesserer, beispielsweise Organoalkoxysilane wie 3-Glycidoxypropyltrimethoxysilan, 3-Aminopropyltrimethoxysilan, N-(2-Aminoethyl)-3-amino-propyl-trimethoxysilan, N-(2-Aminoethyl)-N'-[3-(trimethoxysilyl)propyl]ethylendiamin, 3-Ureidopropyltrimethoxysilan, 3-Chloropropyltrimethoxysilan, Vinyltrimethoxysilan, oder die entsprechenden Organosilane mit Ethoxygruppen oder (Poly)etheroxygruppen anstelle der Methoxygruppen;
      - Stabilisatoren gegen Oxidation, Wärme, Licht und UV-Strahlung;
      - flammhemmende Substanzen, insbesondere Verbindungen wie Aluminiumhydroxid (Al(OH)₃; auch ATH für "Aluminiumtrihydrat" genannt), Magnesiumhydroxid (Mg(OH)₂; auch MDH für "Magnesiumdihydrat" genannt), Ammoniumsulfat ((NH₄)₂SO₄) Borsäure (B(OH)₃), Zinkborat, Melaminborat und Melamincyanurat; Phosphor-haltige Verbindungen wie Ammoniumphosphat ((NH₄)₃PO₄), Ammoniumpolyphosphat, Melaminphosphat, Melaminpyrophosphat, Triphenylphosphat, Diphenylkresylphosphat, Trikresylphosphat, Triethylphosphat, Tris-(2-ethylhexyl)phosphat, Trioctylphosphat, Mono-, Bis- und Tris-(isopropylphenyl)phosphat, Resorcinol-bis(diphenylphosphat), Resorcinol-diphosphat-Oligomer, Tetraphenyl-resorcinol-diphosphit, Ethylendiamin-diphosphat und Bisphenol-A-bis(diphenylphosphat); Halogen-haltige Verbindungen wie Chloroalkylphosphate, insbesondere Tris-(chloroethyl)phosphat, Tris-(chloropropyl)phosphat und Tris-(dichloro-isopropyl)phosphat, polybromierte Diphenylether, insbesondere Decabromdiphenylether, polybromiertes Diphenyloxid, Tris-[3-Bromo-2,2-bis(bromomethyl)propyl]phosphat, Tetrabromo-Bisphenol-A, Bis-(2,3-dibromopropylether) von Bisphenol A, bromierte Epoxidharze, Ethylen-bis(tetrabromophtalimid), Ethylen-bis(dibromo-norbornandicarboximid), 1,2-Bis-(tribromophenoxy)ethan, Tris-(2,3-dibromopropyl)isocyanurat, Tribromophenol, Hexabromocyclododecan, Bis-(hexachlorocyclopentadieno)cyclooctan und Chlorparaffine; sowie Kombinationen aus einer Halogen-haltigen Verbindung und Antimontrioxid (Sb₂O₃) oder Antimonpentoxid (Sb₂O₅);
      - oberflächenaktive Substanzen wie beispielsweise Netzmittel, Verlaufsmittel, Entlüftungsmittel oder Entschäumer;
      - Biozide wie beispielsweise Algizide, Fungizide oder das Pilzwachstum hemmende Substanzen.

Es ist dem Fachmann klar und bekannt, welche Bestandteile in die Epoxidharzkomponente **K1** und welche in die Härterkomponente **K2** gegeben werden können. Es ist hierbei insbesondere darauf zu achten, dass derartige zusätzliche Bestandteile die Lagerstabilität nicht oder nur geringfügig negativ beeinflussen. So ist dem Fachmann beispielsweise klar, dass ein Polyamin mit Epoxiden in der Harzkomponente reagiert und demzufolge lediglich Teil der Härterkomponente sein kann.

Das Gewichtsverhältnis der Epoxidharzkomponente **K1** zur Härterkomponente **K2** beträgt vorzugsweise von 4/1 bis 1/1, besonders bevorzugt 2/1.

In einem weiteren Aspekt betrifft die vorliegende Erfindung ein Verfahren zur Verklebung von Substraten umfassend die Schritte
i) Vermischen einer zweikomponentigen Epoxidharzzusammensetzung wie vorstehend definiert;
ii) Applizieren der Zusammensetzung auf die Oberfläche eines Substrates **S1,** insbesondere eines Metalls;
iii) Kontaktieren der applizierten Epoxidharzzusammensetzung mit der Oberfläche eines weiteren Substrates **S2**, insbesondere eines Metalls; und
iv) Aushärten der Epoxidharzzusammensetzung bei einer Temperatur von 100°C oder weniger, bevorzugt von 10 bis 40°C.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

Die Applikation des Klebstoffes erfolgt vorzugsweise gleichmässig.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; insbesondere Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze, Glasfaserverstärkter Kunststoff (GFK), Kohlenfaserverstärkter Kunststoff (CFK); beschichtete Substrate wie pulverbeschichtete Metalle oder Legierungen; sowie Farben und Lacke, insbesondere Automobildecklacke.

Es hat sich gezeigt, dass die zweikomponentigen Epoxidharzzusammensetzungen insbesondere auf elektrolytisch verzinktem Stahl gut haften und zu erhöhter Schlagzähigkeit führen.

Es ist wichtig zu realisieren, dass die erfindungsgemässen Schlagzähigkeitsmodifikatoren nicht nur bei Aushärtung bei erhöhter Temperatur wirksam sind, sondern dass sie auch bei Aushärtung bei Raumtemperatur zur Erhöhung der Schlagzähigkeit führen. Dass dies so ist, ist keines nahe liegend, da einerseits die Wirksamkeit der Schlagzähigkeit vielfach über eine Phasenseparierung beim Aushärten erklärt wird und andererseits diese Phasenseparierung temperaturabhängig ist.

Es lassen sich mit Hilfe der beschriebenen Schlagzähigkeitsmodifikatoren Epoxidharzzusammensetzungen formulieren, welche typischerweise Bruchenergien, gemessen nach ISO 11343, von mehr als 8.0 J bei 23°C und mehr als 5.5 J bei 0°C aufweisen. Es lassen sich zuweilen Zusammensetzungen formulieren, welche Bruchenergien von 9.5 J bis 12 J bei 23°C und von 6 bis 9 J bei 0°C aufweisen.

Weiterhin lassen sich Bruchfestigkeiten (Impact Peel), gemessen nach ISO 11343, von mehr als 20 N/mm bei 23°C und mehr als 15 N/m bei 0°C realisieren. Es lassen sich zuweilen Zusammensetzungen formulieren, welche Bruchfestigkeiten von 26 bis 30 N/mm bei 23°C und von 18 bis 25 N/mm bei 0°C aufweisen.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter Artikel erhalten. Ein derartiger Artikel kann ein Bauwerk, insbesondere ein Bauwerk des Hoch- oder Tiefbaus, oder ein Transportmittel sein. Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte Artikel ein Transportmittel, insbesondere ein Automobil, oder ein Anbauteil eines Transportmittels, insbesondere eines Automobils.

Falls die Zusammensetzung als Klebstoff für Verklebungen im Fahrzeugbau verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

In einer bevorzugten Ausführungsform wird die zweikomponentige Epoxidharzzusammensetzung wie oben definiert als zweikomponentiger Reparaturklebstoff im Fahrzeugbau verwendet.

In einem weiteren Aspekt stellt die vorliegende Erfindung einen verklebten Artikel bereit, welcher durch ein wie oben beschriebenes Verfahren erhalten wird, und der insbesondere ein Fahrzeug oder ein Anbauteil eines Fahrzeugs ist.

### Beispiele

Im Folgenden sollen einige Beispiele aufgezeigt werden, welche die Erfindung weiter veranschaulichen, den Umfang der Erfindung aber in keiner Weise beschränken sollen und stellen lediglich einige der möglichen Ausführungsformen dar. Tabelle 2 zeigt die experimentelle Bewertung der erfindungsgemässen Epoxidharzzusammensetzungen im Vergleich zum Stand der Technik.

### Herstellungsverfahren von Zusammensetzungen

Für die Herstellung wurden die in Tabelle 1 angegebenen Rohstoffe verwendet.

**Tabelle1. Eingesetzte Rohstoffe.**

| | |
|---|---|
| D.E.R.™ 330 (Bisphenol-A-diglycidylether *= "DER330"*) | Dow Chemical Company |
| D.E.R.™ 671 (= "*DER* 671") ("Typ-1" Epoxidfestharz) (EP-Equivalentgewicht 475-550g/eq) | Dow Chemical Company |
| Polypox R7 (tert-Butylphenyl-glycidylether) ="*Polypox*") | UPPC |
| Poly-THF 2000 (Difunktionelles Polybutylenglykol) (OH-Equivalentgewicht = ca. 1000 g/OH-Equivalent) | BASF |
| Liquiflex H (Hydroxylterminertes Polybutadien) (OH-Equivalentgewicht = ca. 1230 g/OH-Equivalent) | Krahn |
| Isophoron-diisocyanat (= "/*PD*/") | Evonik |
| Jeffamine® D-2000 | Huntsman |
| Jeffamine® D-400 | Huntsman |
| Dynacoll® 7490 (Polyester) | Evonik |
| Dynacoll® 7250 (Polyester, Molekulargewicht 5500 g/mol, Tg=-50°C, Hydroxylzahl 18-24 mgKOH/g)) | Evonik |
| Hypro™ 1300X16 Polymer ATBN (= *"ATBN"*) | Emerald Performance Material LLC |
| Versamid® 140 (Polyamid, dimerisierte Fettsäure/Polyamin- Reaktionsprodukt) | Cognis |

### Aminogruppen-terminierter Schlagzähigkeitsmodifikator SM1

200 g Poly-THF 2000, 48.18g IPDI und 0.03 g Dibutylzinndilaurat werden in einem Gefäss eingewogen und unter Vakuum auf 80° C aufgeheizt. Nach ca. 120 Minuten wird ein NCO-Gehalt von 3.5% ermittelt. Darauf lässt man das entstandene Prepolymer ***P-1*** unter Vakuum 60 Minuten lang (auf 25°C) abkühlen. 234.60 g Jeffamine® D-2000 werden vorgelegt und 70 g des Prepolymeren ***P-1*** unter Stickstoff langsam unter Rühren zugegeben. Man lässt 60 Minuten lang reagieren und erhält so den Aminogruppen-terminierten Schlagzähigkeitsmodifikator ***SM1.***

### Aminogruppen-terminierter Schlagzähigkeitsmodifikator SM2.

80 g Poly-THF 2000, 35.18 g IPDI und 0.03 g Dibutylzinndilaurat sowie 80.0g Liquiflex H werden in einem Gefäss eingewogen und unter Vakuum auf 80° C aufgeheizt. Nach 120 Minuten wird ein NCO-Gehalt von 3.5% ermittelt. Es wird bei 80° C unter Vakuum 90 Minuten gerührt und anschliessend während weiteren 60 Minuten auf 50° C abgekühlt (=Prepolymer ***P-2***). 233.20 g Jeffamine® D-2000 werden in einem zweiten Reaktionsgefäss vorgelegt und 35 g des inzwischen auf 35° C im ersten Reaktionsgefäss abgekühlten Prepolymers ***P-2*** werden langsam unter Rühren zugegeben. Man lässt 60 Minuten lang reagieren und erhält somit den Aminogruppen-terminierten Schlagzähigkeitsmodifikator ***SM2.***

### Aminogruppen-terminierter Schlagzähigkeitsmodifikator SM3.

50 g Poly-THF 2000, 33.93 g IPDI und 0.02 g Dibutylzinndilaurat werden in einem Gefäss eingewogen und unter Vakuum auf 80°C aufgeheizt. Nach etwa 60 Minuten wird ein NCO-Gehalt von 4.11 % ermittelt. Danach werden 1 g Trimethylolpropan zugegeben und weitere 75 Minuten unter Vakuum reagieren gelassen. Es wird nun ein NCO-Gehalt von 2.60% gemessen. Im nächsten Schritt wiegt man 8.70 g Hydroxyethylacrylat (enthalten 0.1% Hydrochinon) ab und gibt dies bei 70° C zu der obigen Reaktionsmischung. Nach 3-stündigem Rühren bei dieser Temperatur unter Vakuum wird vom so gebildeten Prepolymer P-3 ein NCO-Gehalt von 0.55 % gemessen. Schliesslich legt man in einem zweiten Reaktionsgefäss 200.30 g Jeffamine® D-2000 vor und gibt dazu langsam (innerhalb von 60 Minuten) unter Rühren 40 g des inzwischen auf 25° C abgekühlten Prepolymers ***P-3*** aus dem ersten Reaktionsgefäss unter Stickstoff zu. Man lässt 60 Minuten reagieren und erhält so den Aminogruppen-terminierten Schlagzähigkeitsmodifikator ***SM3*.**

### Aminogruppen-terminierter Schlagzähigkeitsmodifikator SM4

150 g Poly-THF 2000, 33.93 g IPDI und 0.02 g Dibutylzinndilaurat werden in einem Gefäss eingewogen und unter Vakuum auf 80°C aufgeheizt. Nach etwa 60 Minuten wird ein NCO-Gehalt von 4.11 % gemessen. Daraufhin gibt man 1 g Trimethylolpropan zu und lässt weitere 75 Minuten unter Vakuum reagieren und misst einen NCO-Gehalt von 2.60%.

Im nächsten Schritt wiegt man 8.70 g Hydroxyethylacrylat (enthaltend 0.1 % Hydrochinon) ab und gibt dies bei 70°C zur obigen Reaktionsmischung. Nach 3-stündigem Rühren unter Vakuum bei dieser Temperatur wird ein vom so gebildeten Prepolymer ***P-4*** ein NCO-Gehalt von 0.55 % gemessen. Schliesslich legt man in einem zweiten Reaktionsgefäss 100.1 g Jeffamine® D-400 vor und gibt dazu langsam (innerhalb von 60 Minuten, Rühren) 100 g des inzwischen auf 25°C abgekühlten Prepolymers ***P-4*** aus dem ersten Reaktionsgefäss zu. Man lässt 60 Minuten reagieren und erhält den Aminogruppen-terminierten Schlagzähigkeitsmodifikator ***SM4*.**

### Aminogruppen-terminierter Schlagzähigkeitsmodifikator SM5

80.00 g Poly-THF 2000, 30.53 g IPDI und 0.02 g Dibutylzinndilaurat sowie 80 g Dynacoll® 7250 werden in einem Gefäss eingewogen und unter Vakuum 80° C aufgeheizt. Nach etwa 120 Minuten wird der NCO Gehalt bestimmt (3.00%). Das so gebildete Polymer ***P-5*** wird 60 Minuten lang auf 20° C abkühlen gelassen. Schliesslich legt man in einem zweiten Reaktionsgefäss 201.20 g Jeffamine® D-2000 vor und gibt dazu langsam (innerhalb von 60 Minuten unter Rühren) 35 g des auf 25°C abgekühlten Prepolymers ***P-5*** aus dem ersten Reaktionsgefäss zu. Man lässt 60 Minuten reagieren und erhält den Aminogruppen-terminierten Schlagzähigkeitsmodifikator ***SM5.***

### Aminogruppen-terminierter Schlagzähigkeitsmodifikator SM6

210.0 g Dynacoll® 7490, 27.81 g IPDI und 0.03 g Dibutylzinndilaurat werden in einem Gefäss eingewogen und unter Vakuum auf 80° C aufheizt. Nach 120 Minuten wird der NCO-Gehalt bestimmt (2.60%) (=Prepolymer ***P-6***). Schliesslich legt man in einem zweiten Reaktionsgefäss 146.20 g Jeffamine® D-2000 vor und gibt dazu langsam (innerhalb von 60 Minuten unter Rühren) 40 g des inzwischen auf 25° C abgekühlten Prepolymers ***P-6*** auf dem ersten Reaktionsgefäss zu. Man lässt 60 Minuten reagieren und erhält den Aminogruppen-terminieren Schlagzähigkeitsmodifikator ***SM6*.**

### Herstellung Schlagzähigkeitsmodifikator C3-1

150 g Poly-THF®2000 (OH-Zahl 57 mg/g KOH, BASF) und 150 g Liquiflex H (OH-Zahl 46 mg/g KOH, Krahn) wurden 30 Minuten unter Vakuum bei 105°C getrocknet. Nachdem die Temperatur auf 90°C reduziert worden war, wurden 64.0 g Isophorondiisocyanat und 0.13 g Dibutylzinndilaurat zugegeben. Die Reaktion wurde unter Vakuum bei 90°C bis zur Konstanz des NCO-Gehaltes bei 3.30% nach 2.5 h geführt (berechneter NCO-Gehalt: 3.38%). Anschliessend wurden 103.0 g Cardolite® NC-700 (Cardanol, Cardolite) als Blockierungsmittel zugegeben. Es wurde bei 105°C unter Vakuum weitergerührt, bis der NCO-Gehalt nach 3.5h unter 0.1% gesunken war. Der so gebildete blockierte Polyurethan-Schlagzähigkeitsmodifikator wurde als ***C3-1*** bezeichnet.

Es wurden die in Tabelle 2 angegebenen zweikomponentigen Epoxidharzzusammensetzungen hergestellt. Die für die Bestandteile angebenen Zahlen in Tabelle 2 stellen Gewichtsteile dar. Bei der Herstellung der jeweiligen Harz- bzw. Härterkomponenten wurden jeweils die flüssigen Bestandteile bei 40°C in einem Rührgefäss vorgelegt und anschliessend unter Rühren die festen Stoffe bei 23°C zugemischt und unter Ansetzen eines Vakuum verrührt. Die gebildeten Harz- bzw. Härterkomponenten waren von pastöser Konsistenz und in Weissblechdosen abgefüllt und verschlossen.

**Tabelle 2.**

| | ***Ref.2*** | ***Ref.3*** | ***Ref.4*** | ***Ref.5*** | ***Ref.6*** | ***1*** | ***2*** | ***3*** | ***4*** | ***5*** | ***6*** |
|---|---|---|---|---|---|---|---|---|---|---|---|
| **1. Komponente** | | | | | | | | | | | |
| *DER330* | 67.0 | 67.0 | 56.0 | 56.0 | 56.0 | 56.0 | 56.0 | 56.0 | 56.0 | 56.0 | 56.0 |
| *DER671* | | | 9.0 | 9.0 | 9.0 | 9.0 | 9.0 | 9.0 | 9.0 | 9.0 | 9.0 |
| ***C3-1*** | | | 17.0 | 17.0 | 17.0 | 17.0 | 17.0 | 17.0 | 17.0 | 17.0 | 17.0 |
| *Toughener B*¹ | 21.0 | 21.0 | | | | | | | | | |
| *Polypox* | | | 5.0 | 5.0 | 5.0 | 5.0 | 5.0 | 5.0 | 5.0 | 5.0 | 5.0 |
| Dynasilan A187² | 3.0 | 3.0 | | | | | | | | | |
| Epoxysilan | | | 0.9 | 0.9 | 0.9 | 0.9 | 0.9 | 0.9 | 0.9 | 0.9 | 0.9 |
| Cardolite®NC-700 | 0.5 | 0.5 | | | | | | | | | |
| Tensid | | | 0.1 | 0.1 | 0.1 | 0.1 | 0.1 | 0.1 | 0.1 | 0.1 | 0.1 |
| Fumed Silica | 4.5 | 4.5 | 3.0 | 3.0 | 3.0 | 3.0 | 3.0 | 3.0 | 3.0 | 3.0 | 3.0 |
| Füllstoffmischung | | | 6.0 | 6.0 | 6.0 | 6.0 | 6.0 | 6.0 | 6.0 | 6.0 | 6.0 |
| Talk | 3.6 | 3.6 | 3.0 | 3.0 | 3.0 | 3.0 | 3.0 | 3.0 | 3.0 | 3.0 | 3.0 |

| **2.Komponente** | | | | | | | | | | | |
|---|---|---|---|---|---|---|---|---|---|---|---|
| *ATBN* | 17.0 | 17.0 | 17.0 | 11.8 | 19.0 | 23.5 | 23.5 | 23.5 | 23.5 | 23.5 | 23.5 |
| 4,7,10-Trioxatri-decan-1,13-diamin | 10.0 | 10.0 | 10.0 | 10.4 | 10.0 | 15.0 | 15.0 | 15.0 | 15.0 | 15.0 | 15.0 |
| Lupasol P³ | 14.0 | 14.0 | 14.0 | 8.6 | 14.0 | | | | | | |
| Lupasol WF⁴ | | | | | | 10.0 | 10.0 | 10.0 | 10.0 | 10.0 | 10.0 |
| Jeffamine® D-400 | 22.3 | 22.3 | 22.3 | 15.7 | 24.3 | 5.0 | 5.0 | 5.0 | 5.0 | 5.0 | 5.0 |
| Versamid® 140 | 14.0 | 14.0 | 14.0 | 30.0 | 10.0 | 7.0 | 7.0 | 7.0 | 7.0 | 7.0 | 7.0 |
| Katalysator⁵ | 5.0 | 5.0 | 5.0 | 5.2 | 5.0 | 1.5 | 1.5 | 1.5 | 1.5 | 1.5 | 1.5 |
| ***SM1*** | | | | | | 15.0 | | | | | |
| ***SM2*** | | | | | | | 15.0 | | | | |
| ***SM3*** | | | | | | | | 15.0 | | | |
| ***SM4*** | | | | | | | | | 15.0 | | |
| ***SM5*** | | | | | | | | | | 15.0 | |
| ***SM6*** | | | | | | | | | | | 15.0 |
| Pyrogene Kieselsäure | | 5.0 | 5.0 | 5.0 | 5.0 | 5.0 | 5.0 | 5.0 | 5.0 | 5.0 | 5.0 |
| Füllstoffmischung | | 12.7 | 12.7 | 13.3 | 13.3 | 18.0 | 18.0 | 18.0 | 18.0 | 18.0 | 18.0 |

| | | | | | | | | | | | |
|---|---|---|---|---|---|---|---|---|---|---|---|
| Zweikomponentige Zusammensetzungen (Angaben in Gewichtsteilen). Mischverhältnis Komponenten erste Komp. : zweite Komp. = 2:1 (w:w). ¹*Toughener B* = nach Absatz [0075] in US 2005/0070634 A1 hergestellt; ²Dynasilan A187 (Epoxysilan, Evonik); ³Lupasol P (BASF) = Polyethylenimin, Mw = 750'000 g/mol, 50%ig in Wasser; ⁴Lupasol WF (BASF)=Polyethylenimin, Mw = 25'000 g/mol); ⁵Katalysator=2,4,6-Tris(dimethylaminomethyl)phenol | | | | | | | | | | | |

Das Vergleichsbeispiel ***Ref.1*** stellt den kommerziell bei Dow Automotive erhältlichen Klebstoff Betamate™ 2096 dar. Das Vergleichsbeispiel ***Ref.2*** stellt das Beispiel "Klebstoff Beispiel 1" ("Adhesive example 1") aus den Komponenten "A1" und "B1" des in WO 2009/025991 beschriebenen Standes der Technik dar. Das Vergleichsbeispiel ***Ref.3*** entspricht dem Beispiel der 2:1 gewichtsmässig gemischten Komponenten "A1" und mit einer gefüllten Härterkomponente "B1" des WO 2009/025991 beschriebenen Standes der Technik dar. Das Vergleichsbeispiel ***Ref.4*** entspricht einer Kombination der für die erfindungsgemässen Beispiele ***1*** bis ***6*** verwendeten Harzkomponente mit einer gefüllten Härterkomponente "B1" des in WO 2009/025991 beschriebenen Standes der Technik dar. Das Vergleichsbeispiel ***Ref.5*** entspricht einer 2:1 gewichtsmässig gemischten Kombination der für die erfindungsgemässen Beispiele ***1*** bis ***6*** verwendeten Harzkomponente mit einer an Härterkomponente "B1" des in WO 2009/025991 angelehnten gefüllten Härterkomponente mit einem Anteil von 30 Gew.-% von Versamid, welches als obere Grenze gemäss Anspruch 1 des WO 2009/025991 für das Polyamid (Versamid) offenbart wird. Das Vergleichsbeispiel ***Ref.6*** entspricht einer 2:1 gewichtsmässig gemischten Kombination der für die erfindungsgemässen Beispiele ***1*** bis ***6*** verwendeten Harzkomponente mit einer an Härterkomponente "B1" des in WO 2009/025991 angelehnten gefüllten Härterkomponente mit einem Anteil von 10 Gew.-% von Versamid, welches als untere Grenze gemäss Anspruch 1 des WO 2009/025991 für das Polyamid (Versamid) offenbart wird.

### Prüfmethoden:

Für die Prüfung wurden die jeweiligen Harz- und Härter-Komponenten von Tabelle 2 im Gewichts-Verhältnis von Harzkomponente:Härterkomponente von 2:1 mittels eines Rührers miteinander weitgehend homogen gemischt und direkt auf die Substratoberflächen für die Herstellung der Probekörper verwendet.

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 1.5 mm hergestellt. Das Substrat wurde vor der Verklebung mit Aceton gereinigt. Dabei betrug die Klebfläche 25 x 10mm bei einer Schichtdicke von 0.3mm. Nach einer Härtung während 7 Tagen bei 23°C wurde bei Raumtemperatur die Zugscherfestigkeit (*ZSF_{7d}, _{RT}*) gemessen bei einer Zuggeschwindigkeit von 10mm/min. Die Ergebnisse sind in Tabelle 3 zusammen gestellt.

### Schlagschälarbeit (ISO 11343)

Die Probekörper wurden aus den beschriebenen Beispiel-Zusammensetzungen und mit elektrolytisch verzinktem DC04 Stahl (eloZn) mit dem Mass 90 x 20 x 0.8mm hergestellt, dabei betrug die Klebfläche 20 x 30mm bei einer Schichtdicke von 0.3mm. Gehärtet wurde während 7 Tagen bei 23°C. Die Messung der Schlagschälarbeit erfolgte jeweils bei 23°C *(BE_{RT})* und bei 0°C (*BE_{0°C}*)*.* Die Schlaggeschwindigkeit betrug 2 m/s. Als Bruchenergie (*BE*) (*BE_{RT}* bzw. *BE_{0°C}*) in Joule wird die Fläche unter der Messkurve (von 25% bis 90%, gemäss ISO 11343) angegeben. Die Schlagschälfestigkeitswerte (Impact Peel) wurden gemäss ISO 11343 bei 23°C (*IP_{RT}*) und bei 0°C (*IP*_{*0*°C}) gemessen Die Ergebnisse sind in Tabelle 3 zusammen gestellt.

### Ergebnisse

**Tabelle 3. Mechanische Eigenschaften der ausgehärteten Zusammensetzungen.**

| | ***Ref.1*** | ***Ref.2*** | ***Ref.3*** | ***Ref.4*** | ***Ref.5*** | ***Ref.6*** | ***1*** | ***2*** | ***3*** | ***4*** | ***5*** | ***6*** |
|---|---|---|---|---|---|---|---|---|---|---|---|---|
| *ZSF_{7d},_{RT}* [MPa] | 24.0 | 24.8 | 22.5 | 25.4 | 26.0 | 24.8 | 13.0 | 15.4 | 16.1 | 17.8 | 15.5 | 17.1 |
| *BER_{RT}* [J] | 0.9 | 6.5 | 0.7 | 0.5 | 0.5 | 3.6 | 10.9 | 9.9 | 8.6 | 10.2 | 8.7 | 9.9 |
| *IP_{RT}* [N/mm] | 3.0 | 16.5 | 2.5 | 2.0 | 2.0 | 11.0 | 28.0 | 26.0 | 24.0 | 27.5 | 23.0 | 26.0 |
| *BE_{0°C}*[J] | 0.2 | 2.9 | 1.2 | 0.5 | 0.4 | 1.3 | 8.1 | 5.7 | 5.9 | 5.7 | 5.6 | 5.9 |
| *IP_{0°C}* [N/mm] | 0.5 | 8.5 | 5.0 | 2.0 | 1.5 | 6.5 | 24.0 | 17.5 | 18.5 | 19.0 | 17.5 | 18.0 |

Der Tabelle 3 lässt sich entnehmen, dass die als Vergleichsbeispiele ***Ref. 1*** bis ***Ref.6*** im Vergleich zu den erfindungsgemässen Zusammensetzungen ***1*** bis ***6*** auf elektrolytisch verzinktem Stahl wesentlich schlechtere Schlagfestigkeiten (Bruchenergien & Schlagschälfestigkeiten) aufweisen. Die erfindungsgemässen Zusammensetzungen ***1*** bis ***6*** weisen vielmehr Werte für die Schlagschälfestigkeiten auf, die gegenüber denen der Vergleichsversuche, die Zusammensetzungen des Stands der Technik entsprechen, um das 10-fache überlegen sind. Dies geht zwar mit einer leichten Reduzierung der Zugscherfestigkeit einher, bewegen sich jedoch nach weiterhin auf einem hohen und akzeptablen Niveau. Die Ergebnisse der Tabelle 2 zeigen den vorteilhaften Einfluss des erniedrigten Polyamid-Gehaltes, insbesondere in Kombination mit dem Aminogruppen-terminierten Schlagzähigkeitsmodifikator.

Die durch die Verwendung von Füllstoffen bedingte Reduktion der Bruchenergie bzw. Schlagschälfestigkeiten (Vergleich ***Ref. 2*** mit ***Ref.3)*** kann bei auch bei den Füllstoff-enthaltenden erfindungsgemässen Zusammensetzungen mehr als kompensiert werden (Vergleich ***1*** mit ***Ref.2).***

Die erfindungsgemässen Zusammensetzungen weisen aufgrund einer erhöhten Flexibilität eine deutliche Zunahme der Bruchenergien auf. Die Klebeverbindungen werden somit auch bei stärkeren Schlagbelastungen nicht brüchig, sondern weisen eine ausreichende Flexibilität auf, um ihre Bindungsintegrität voll zu erhalten. Die Zusammensetzungen der Vergleichsbeispiele sind jedoch aufgrund deutlich weniger flexibel, so dass die Klebeverbindung bereits bei geringer Belastung bricht.

Damit erweisen sich die erfindungsgemässen Schlagzähigkeitsmodifikatoren und die diese enthaltenen Epoxidharzzusammensetzungen als insbesondere für den Fahrzeugbau geeignet, wo es erforderlich ist, dass Klebeverbindungen auch bei grossen mechanischen Beanspruchungen, beispielsweise bei einem Unfall, ihre Integrität beibehalten.

## Patentansprüche

1. Zweikomponentige Epoxidharzzusammensetzung enthaltend
- eine Epoxidharzkomponente **K1,** die mindestens ein Epoxidharz **A** mit
durchschnittlich mehr als einer Epoxidgruppe pro Molekül umfasst;
und
- eine Härterkomponente **K2**, die zwischen 1 und 10 Gew.-%, bevorzugt 4 und 8 Gew.-%, bezogen auf das Gesamtgewicht der Härterkomponente, Aminogruppen-terminiertes Polyamid **B** umfasst; wobei mindestens eine der Komponenten **K1, K2** mindestens einen Schlagzähigkeitsmodifikator **C** enthält.

2. Zweikomponentige Epoxidharzzusammensetzung gemäss Anspruch 1, **dadurch gekennzeichnet, dass** die Zusammensetzung als Schlagzähigkeitsmodifikator **C** einen Aminogruppen-terminierten Schlagzähigkeitsmodifikator **C1** enthält, welcher durch Umsetzung eines Isocyanatgruppen aufweisenden Polyurethan-Prepolymers, eines primären Diamins und gegebenenfalls mindestens eines Michael-Akzeptors hergestellt wird, wobei das Isocyanatgruppen aufweisende Polyurethan-Prepolymer hergestellt wird aus mindestens einem Polyisocyanat und mindestens einem Polyester- oder Polyetherpolyol, welches mindestens zwei Hydroxylgruppen aufweist,
und welcher Teil der Härterkomponente **K2**, insbesondere in einer Menge von 1 bis 30 Gewichts-%, bezogen auf das Gewicht der Härterkomponente **K2**, ist.

3. Zweikomponentige Epoxidharzzusammensetzung gemäss Anspruch 2, **dadurch gekennzeichnet, dass** der Aminogruppen-terminierte Schlagzähigkeitsmodifikator **C1** die Formel (II) aufweist 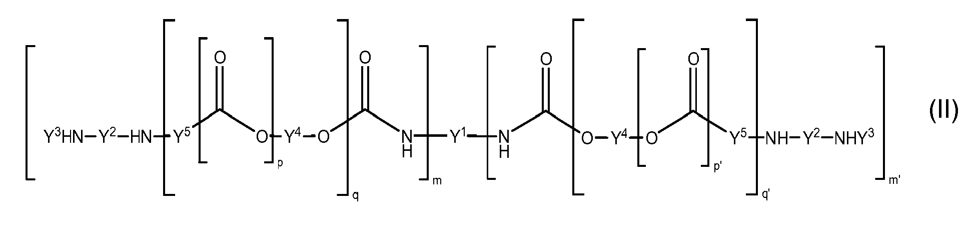 wobei Y¹ für ein mit m+m' Isocyanatgruppen terminiertes lineares oder verzweigtes Polyurethan-Prepolymer nach dem Entfernen aller endständigen Isocyanatgruppen steht;
Y² für eine zweiwertige Gruppe eines Polyoxyalkylens mit C₂-C₆-Alkylengruppen, eines Polybutadiens, eines Butadien/Acrylnitril-Copolymers oder eines synthetischen Kautschukes steht;
Y³ unabhängig voneinander für H oder eine Alkylgruppe mit 1 bis 10 Kohlenstoffatomen oder für einen Rest der Formel (III) steht, 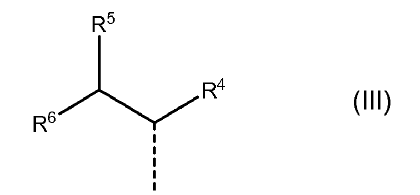 wobei
R⁴ für ein Wasserstoffatom oder für einen Rest steht, welcher ausgewählt ist aus der Gruppe bestehend aus -R⁷, -COOR⁷ und -CN, und R⁵ für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R⁶ für ein Wasserstoffatom oder für einen Rest steht, welcher ausgewählt ist aus der Gruppe bestehend aus -R⁷, -COOR⁷, -CH₂COOR⁷ und -CN,
wobei R⁷ für einen einwertigen Kohlenwasserstoffrest mit 1 bis 20 C-Atomen steht;
Y⁴ für eine Alkylengruppe mit 1 bis 6 Kohlenstoffatomen steht, oder unter der Voraussetzung für nichts steht, dass p und p' = 0 sind; und
Y⁵ für einen zweiwertigen Rest der Formel (IV) oder (IV') steht; 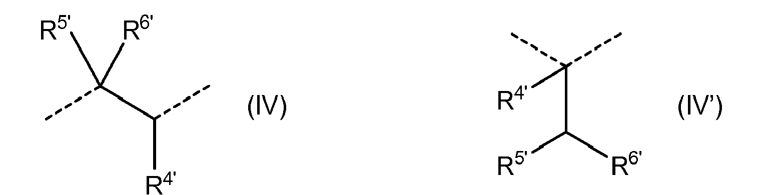 wobei
R^{4'} für ein Wasserstoffatom oder für einen Rest steht, welcher ausgewählt ist aus der Gruppe bestehend aus -R⁷, -COOR⁷ und -CN,
R^{5'} für einen Rest steht, welcher ausgewählt ist aus der Gruppe bestehend aus -COOR⁷, -CONH₂, -CONHR⁷, -CONR⁷₂, -CN, -NO₂, -PO(OR⁷)₂, -SO₂R⁷ und -SO₂OR⁷, und
R^{6'} für ein Wasserstoffatom oder für einen Rest steht, welcher ausgewählt ist aus der Gruppe bestehend aus -R⁷, -COOR⁷, -CH₂COOR⁷ und -CN,
wobei R⁷ für einen einwertigen Kohlenwasserstoffrest mit 1 bis 20 C-Atomen steht;
p und p' je für 0 oder 1 steht;
q und q' je für 0 oder 1 steht;
m und m' je für Werte von 0 bis 7, bevorzugt für 0 oder 1 oder 2 stehen mit der Massgabe, dass m + m' für einen Wert von 1 bis 8, insbesondere für 1 oder 2, steht.

4. Zweikomponentige Epoxidharzzusammensetzung gemäss einem der vorhergehenden Ansprüche, **dadurch gekennzeichnet, dass** die Zusammensetzung als Schlagzähigkeitsmodifikator **C** einen Flüssigkautschuk **C2**, welcher ein Epoxid-terminiertes Polymer, insbesondere ein Epoxid-terminiertes Acrylnitril/Butadien-Copolymer, enthält,
und welcher Teil der Epoxidharzkomponente **K1,** insbesondere in einer Menge von 1 bis 45 Gewichts-%, bezogen auf das Gewicht der Epoxidharzkomponente **K1,** ist.

5. Zweikomponentige Epoxidharzzusammensetzung gemäss einem der vorhergehenden Ansprüche, **dadurch gekennzeichnet, dass** die Zusammensetzung als Schlagzähigkeitsmodifikator **C** ein Polymer **C3** der Formel (XI) enthält 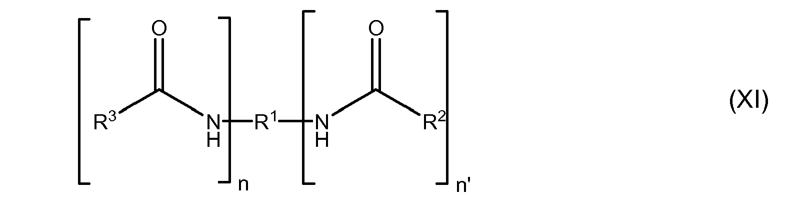 wobei R¹ für ein mit n+n' Isocyanatgruppen terminiertes lineares oder verzweigtes Polyurethanprepolymer nach dem Entfernen aller endständigen Isocyanatgruppen steht;
R² und R³ unabhängig voneinander je für einen Substituenten stehen, welcher ausgewählt ist aus der Gruppe bestehend aus 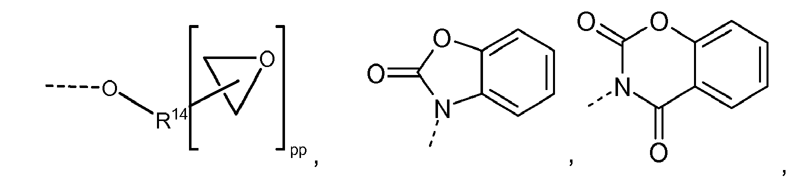 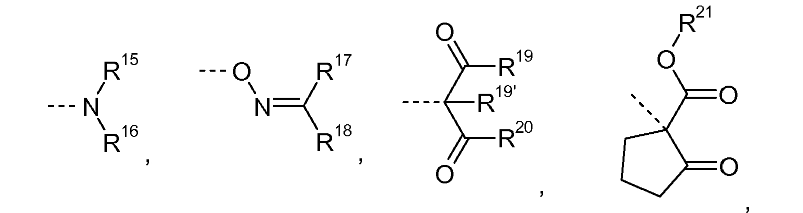 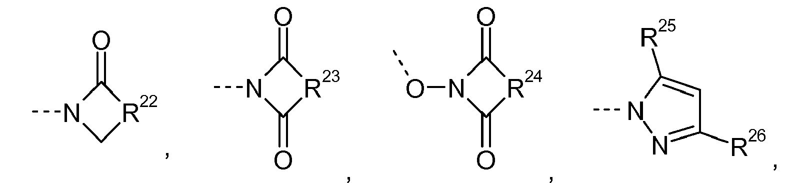 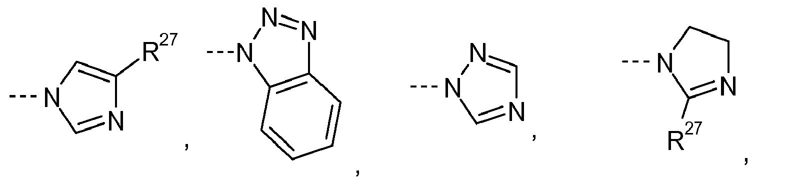 und ---O―R²⁸
wobei R¹⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht;
pp für die Werte 1, 2 oder 3 steht;
R¹⁵, R¹⁶, R¹⁷ und R¹⁸ je unabhängig voneinander für eine Alkyl-oder Cycloalkyl- oder Aralkyl- oder Arylalkyl-Gruppe steht;
oder
R¹⁵ zusammen mit R¹⁶, oder R¹⁷ zusammen mit R¹⁸, einen Teil eines 4- bis 7- gliedrigen Rings, welcher allenfalls substituiert ist, bildet;
R¹⁹, R^{19'} und R²⁰ je unabhängig voneinander für eine Alkyl- oder Aralkyl- oder Arylalkyl-Gruppe oder für eine Alkyloxy- oder Aryloxy- oder Aralkyloxy-Gruppe steht;
R¹¹ für eine Alkylgruppe steht;
R²³ und R²⁴ je unabhängig voneinander für eine Alkylengruppe mit 2 bis 5 C-Atomen stehen, welche gegebenenfalls Doppelbindungen aufweist oder substituiert ist, oder für eine Phenylengruppe oder für eine hydrierte Phenylengruppe stehen; R²⁵, R²⁶ und R²⁷ je unabhängig voneinander für H oder für eine Alkylgruppe oder für eine Arylgruppe oder eine Aralkylgruppe stehen;
R²⁸ für eine Aralkylgruppe oder für eine ein- oder mehrkernige substituierte oder unsubstituierte Aromatengruppe, welche gegebenenfalls aromatische Hydroxylgruppen aufweist, steht;
und n und n' stehen unabhängig von einander je für Werte von 0 bis 7, bevorzugt für 0 oder 1 oder 2, stehen mit der Massgabe, dass n + n' für einen Wert von 1 bis 8, insbesondere für 1 oder 2, steht.

6. Zweikomponentige Epoxidharzzusammensetzung gemäss einem der vorhergehenden Ansprüche, **dadurch gekennzeichnet, dass** die Zusammensetzung als Schlagzähigkeitsmodifikator **C** ein Aminogruppen-terminiertes Acrylnitril/Butadien-Copolymer **C4** enthält; und welches Teil der Härterkomponente **K2**, insbesondere in einer Menge von 10 bis 40 Gewichts-%, bezogen auf das Gewicht der Härterkomponente **K2**, ist.

7. Zweikomponentige Epoxidharzzusammensetzung gemäss einem der vorhergehenden Ansprüche, **dadurch gekennzeichnet, dass** die Zusammensetzung als Schlagzähigkeitsmodifikator **C** eine Kombination von Aminogruppen-terminiertem Schlagzähigkeitsmodifikator **C1** und/oder Flüssigkautschuk **C2** und/oder Polymer **C3** der Formel (XI) und/oder Aminogruppen-terminiertem Acrylnitril/Butadien-Copolymer **C4** enthält 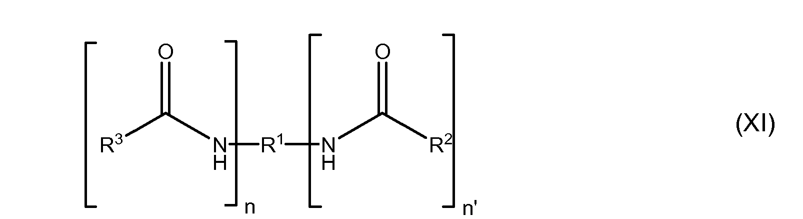 wobei R¹ für ein mit n+n' Isocyanatgruppen terminiertes lineares oder verzweigtes Polyurethanprepolymer nach dem Entfernen aller endständigen Isocyanatgruppen steht;
R² und R³ unabhängig voneinander je für einen Substituenten stehen, welcher ausgewählt ist aus der Gruppe bestehend aus 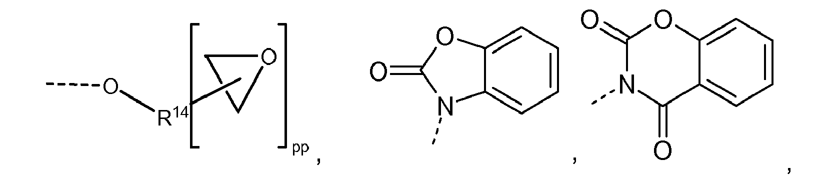 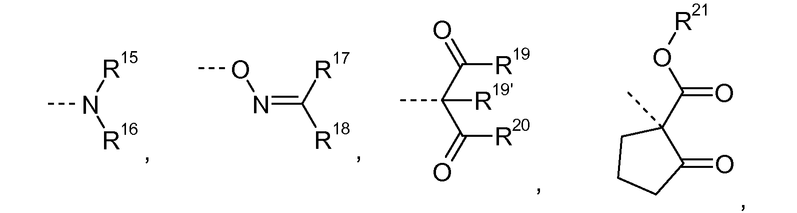 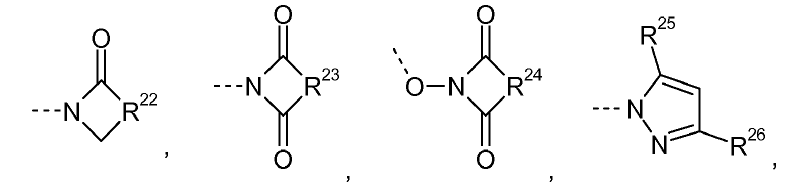 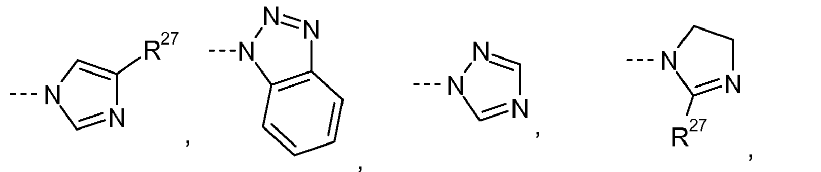 und ---O―R²⁸
wobei R¹⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht;
pp für die Werte 1, 2 oder 3 steht;
R¹⁵, R¹⁶, R¹⁷ und R¹⁸ je unabhängig voneinander für eine Alkyl-oder Cycloalkyl- oder Aralkyl- oder Arylalkyl-Gruppe steht;
oder
R¹⁵ zusammen mit R¹⁶, oder R¹⁷ zusammen mit R¹⁸, einen Teil eines 4- bis 7- gliedrigen Rings, welcher allenfalls substituiert ist, bildet;
R¹⁹, R^{19'} und R²⁰ je unabhängig voneinander für eine Alkyl- oder Aralkyl- oder Arylalkyl-Gruppe oder für eine Alkyloxy- oder Aryloxy- oder Aralkyloxy-Gruppe steht;
R¹¹ für eine Alkylgruppe steht;
R²³ und R²⁴ je unabhängig voneinander für eine Alkylengruppe mit 2 bis 5 C-Atomen stehen, welche gegebenenfalls Doppelbindungen aufweist oder substituiert ist, oder für eine Phenylengruppe oder für eine hydrierte Phenylengruppe stehen; R²⁵, R²⁶ und R²⁷ je unabhängig voneinander für H oder für eine Alkylgruppe oder für eine Arylgruppe oder eine Aralkylgruppe stehen;
R²⁸ für eine Aralkylgruppe oder für eine ein- oder mehrkernige substituierte oder unsubstituierte Aromatengruppe, welche gegebenenfalls aromatische Hydroxylgruppen aufweist, steht;
und n und n' stehen unabhängig von einander je für Werte von 0 bis 7, bevorzugt für 0 oder 1 oder 2, stehen mit der Massgabe, dass n + n' für einen Wert von 1 bis 8, insbesondere für 1 oder 2, steht.

8. Zweikomponentige Epoxidharzzusammensetzung gemäss Anspruch 7, **dadurch gekennzeichnet, dass** die Gewichtssumme von dem in der jeweiligen Komponenten (**K1**, **K2**) befindlichen Aminogruppen-terminiertem Schlagzähigkeitsmodifikator **C1,** Flüssigkautschuk **C2**, Polymer **C3** und Aminogruppen-terminiertem Acrylnitril/Butadien-Copolymer **C4** nicht mehr als 80 Gew.-%, insbesondere nicht mehr als 50 Gew.-%, bezogen auf das Gewicht der jeweiligen Komponente (**K1**, **K2**) beträgt.

9. Zweikomponentige Epoxidharzzusammensetzung gemäss einem der vorhergehenden Ansprüche, **dadurch gekennzeichnet, dass** die Härterkomponente **K2** zusätzlich bis zu 20 Gew.-%, bezogen auf das Gesamtgewicht der Härterkomponente, Poly(ethylenimin) enthält.

10. Zweikomponentige Epoxidharzzusammensetzung gemäss einem der vorhergehenden Ansprüche, **dadurch gekennzeichnet, dass** die Zusammensetzung weiterhin mindestens einen Füllstoff **F**, insbesondere in einer Menge von 3-50 Gew.-%, bezogen auf das Gewicht der Zusammensetzung, enthält.

11. Zweikomponentige Epoxidharzzusammensetzung gemäss einem der vorhergehenden Ansprüche, **dadurch gekennzeichnet, dass** das Gewichtsverhältnis der Epoxidharzkomponente **K1** zur Härterkomponente **K2** von 4/1 bis 1/1, bevorzugt 2/1, beträgt.

12. Zweikomponentige Epoxidharzzusammensetzung gemäss einem der vorhergehenden Ansprüche, **dadurch gekennzeichnet, dass** das Aminogruppen-terminierte Polyamid **B** ein Reaktionsprodukt einer dimerisierten Fettsäure und eines Polyamins ist.

13. Verfahren zur Verklebung von Substraten umfassend die Schritte
i) Vermischen einer zweikomponentigen Epoxidharzzusammensetzung gemäss einem der Ansprüche 1 bis 12;
ii) Applizieren der Zusammensetzung auf die Oberfläche eines Substrates **S1,** insbesondere eines Metalls;
iii) Kontaktieren der applizierten Epoxidharzzusammensetzung mit der Oberfläche eines weiteren Substrates **S2**, insbesondere eines Metalls; und
iv) Aushärten der Epoxidharzzusammensetzung bei einer Temperatur von 140°C oder weniger, bevorzugt von 10 bis 60°C.

14. Verwendung einer zweikomponentigen Epoxidharzzusammensetzung gemäss einem der Ansprüche 1 bis 12 als zweikomponentiger Reparaturklebstoff im Fahrzeugbau.

15. Verklebter Artikel, welcher durch ein Verfahren gemäss Anspruch 13 erhalten wird, und insbesondere ein Fahrzeug oder ein Anbauteil eines Fahrzeugs ist.
